# EUROPEAN PATENT APPLICATION

(11) **EP 4 561 062 A1**
(43) Date of publication of application: **28.05.2025**
(21) Application number: 22951434.4
(22) Date of filing: 19.07.2022
(51) Int. Cl.: H04N 19/117

(54) **FILTERING METHOD, ENCODER, DECODER, CODE STREAM AND STORAGE MEDIUM**

(71) Applicant: GUANGDONG OPPO MOBILE TELECOMMUNICATIONS CORP., LTD., Dongguan, Guangdong 523860 (CN)
(72) Inventor: XIE, Zhihuang, Dongguan, Guangdong 523860 (CN)
(74) Representative: RGTH
(86) International application number: PCT/CN2022/106441
(87) International publication number: WO 2024/016156

(57) **Abstract**

The embodiments of the present application discloses a transformation method, an encoder, a decoder, a bitstream and a storage medium, the method includes: parsing a bitstream to obtain a frame-level control flag that is based on a network filtering model, where the frame-level control flag is used to determine whether filtering is applied to all blocks of a current frame; in response to that the frame-level control flag specifies a disabled state and an obtained frame-level usage flag specifies that any video component of a current block is enabled, obtaining a block-level usage flag; in response to that the block-level usage flag specifies that any video component of the current block is used, obtaining a quantization parameter, where the quantization parameter includes: an adjusted block-level quantization parameter or a frame-level best quantization parameter; and filtering a current block of the current frame based on the quantization parameter and the network filtering model to obtain first residual information of the current block.

## Description

### TECHNICAL FIELD

Embodiments of the present application relate to the field of picture processing technology, and in particular to, a filtering method, an encoder, a decoder, a bitstream, and a storage medium.

### BACKGROUND

In a video coding system, a block-based hybrid coding architecture is used in most video coding processes. In the architecture, each frame of a video is partitioned into several coding tree units (CTUs), and a coding tree unit may be further partitioned into several rectangular coding units (CUs). These coding units may be rectangular blocks or square blocks. Since adjacent CUs use different coding parameters, such as different transform processes, different quantization parameter (QPs), different prediction modes, or different reference picture frames, and magnitudes of errors and distribution characteristics introduced in various CUs are independent of each other, discontinuity of a boundary between adjacent CUs causes blocking effect, which affects subjective quality and objective quality of a reconstructed picture and even affects prediction accuracy of subsequent coding.

Thus, during a coding process, an in-loop filter is used to improve the subjective quality and objective quality of a reconstructed picture. An in-loop filtering method based on a neural network has the most outstanding coding performance. In the related art, on the one hand, a neural network filtering models are switched at the coding tree unit level, and different neural network filtering models are obtained by training with different sequence-level quantization parameter values (BaseQP). The encoding side attempts these different neural network filtering models to search a neural network filtering model with the lowest rate-distortion cost which is used as the optimal network model for the current coding tree unit. Based on a usage flag and network model index information of the coding tree unit level, the decoding side may use the same network model as the encoding side for filtering. On the other hand, for different test conditions and quantization parameters, only one simplified neural network filtering model with low-complexity is enough for in-loop filtering. In a case where the neural network filtering model with low-complexity is employed for filtering, quantization parameter information is added as an additional input, that is, the quantization parameter information is used as an input of the network to improve a generalization capability of the neural network filtering model, so as to achieve good coding performance without switching the neural network filtering model.

However, when filtering is performed by switching the neural network filtering models at the coding tree unit level, since each coding tree unit corresponds to a neural network filtering model once, the hardware implementation is highly complex and has a large overhead. When a low-complexity neural network filtering model is used for filtering, the selections during filtering is not flexible enough due to the influence of quantization parameters, and there are still few selections when coding, which cannot achieve a good coding effect.

### SUMMARY

The embodiments of the present application provide a filtering method, an encoder, a decoder, a bitstream and a storage medium, which may make selections of input information for filtering more flexible without increasing complexity, thereby improving coding efficiency.

The technical solutions of the embodiments of the present application may be implemented as follows.

In a first aspect, the embodiments of the present application provide a filtering method, which is applied to the decoder and includes:
parsing a bitstream to obtain a frame-level control flag that is based on a network filtering model, where the frame-level control flag is used to determine whether filtering is applied to all blocks of a current frame;
in response to that the frame-level control flag specifies a disabled state and an obtained frame-level usage flag specifies that any video component of a current block is enabled, obtaining a block-level usage flag;
in response to that the block-level usage flag specifies that any video component of the current block is used, obtaining a quantization parameter, where the quantization parameter includes: an adjusted block-level quantization parameter or a frame-level best quantization parameter; and
filtering a current block of the current frame based on the quantization parameter and the network filtering model to obtain first residual information of the current block.

In a second aspect, the embodiments of the present application provide a filtering method, which is applied to the encoder and includes:
in response to that an obtained sequence-level enabled flag specifies an allowed state, obtaining an original value of a current block of a current frame, a reconstructed value of the current block and a first quantization parameter, where the first quantization parameter includes: an original quantization parameter;
performing at least twice filtering estimation on the current block based on a network filtering model, the reconstructed value of the current block, at least one frame-level quantization offset parameter and the original quantization parameter to determine at least two first sub-rate-distortion costs of the current block, and traversing the current frame to determine at least two first rate-distortion costs of the current frame;
determining a first best-rate-distortion cost based on the at least two first rate-distortion costs;
determining a block-level usage flag and a first sub-best-rate-distortion cost of the current block based on the at least two first sub-rate-distortion costs, and traversing the current frame to determine a second best-rate-distortion cost of the current frame; and
determining a frame-level control flag based on the first best-rate-distortion cost and the second best-rate-distortion cost.

In a third aspect, the embodiments of the present application provide a decoder, which includes:
a parsing portion, configured to parse a bitstream to obtain a frame-level control flag that is based on a network filtering model, where the frame-level control flag is used to determine whether filtering is applied to all blocks of a current frame;
a first determining portion, configured to obtain a block-level usage flag in response to that the frame-level control flag specifies a disabled state and an obtained frame-level usage flag specifies that any video component of a current block is enabled; and obtain a quantization parameter in response to that the block-level usage flag specifies that any video component of the current block is used, where the quantization parameter includes: an adjusted block-level quantization parameter or a frame-level best quantization parameter; and
a first filtering portion, configured to filter a current block of the current frame based on the quantization parameter and the network filtering model to obtain first residual information of the current block.

In a fourth aspect, the embodiments of the present application provides a decoder, which includes:
a first memory, configured to store a computer program executable on a first processor; and
the first processor, configured to perform the method described in the first aspect when the computer program is executed.

In a fifth aspect, the embodiments of the present application provide an encoder, which includes:
a second determining portion, configured to obtain an original value of a current block of a current frame, a reconstructed value of the current block and a first quantization parameter in response to that an obtained sequence-level enabled flag specifies an allowed state, where the first quantization parameter includes: an original quantization parameter;
a second filtering portion, configured to perform at least twice filtering estimation on the current block based on a network filtering model, the reconstructed value of the current block, at least one frame-level quantization offset parameter and the original quantization parameter to determine at least two first sub-rate-distortion costs of the current block, and traverse the current frame to determine at least two first rate-distortion costs of the current frame; and
the second determining portion, further configured to determine a first best-rate-distortion cost based on the at least two first rate-distortion costs; determine a block-level usage flag and a first sub-best-rate-distortion cost of the current block based on the at least two first sub-rate-distortion costs, and traverse the current frame to determine a second best-rate-distortion cost of the current frame; and determine a frame-level control flag based on the first best-rate-distortion cost and the second best-rate-distortion cost.

In a sixth aspect, the embodiments of the present application provide an encoder, which includes:
a second memory, configured to store a computer program executable on a second processor; and
the second processor, configured to perform the method described in the second aspect when the computer program is executed.

In a seventh aspect, the embodiments of the present application provide a computer storage medium, where the computer-readable storage medium stores a computer program, and the computer program, when executed on the first processor, causes the method described in the first aspect to be implemented, or the computer program, when executed on the second processor, causes the method described in the second aspect to be implemented.

In an eighth aspect, the embodiments of the present application provides a bitstream, where the bitstream is generated by bit encoding based on information to be encoded; where the information to be encoded includes at least one of the following: first syntax element flag information of a current video sequence, second syntax element flag information of a current frame, third syntax element flag information of the current frame, fourth syntax element flag information of a current block, fifth syntax element flag information of the current block, sixth syntax element flag information of the current frame, a residual scaling factor, and an initial residual value of at least one partition block included of the current frame; where the current frame includes the at least one partition block, and the current block is any one of the at least one partition block.

The embodiments of the present application provide a filtering method, an encoder, a decoder, a bitstream and a storage medium. The frame-level control flag that is based on the network filtering model is obtained by parsing the bitstream, where the frame-level control flag is used to determine whether filtering is applied to all blocks of the current frame; in response to that the frame-level control flag specifies the disabled state and the obtained frame-level usage flag specifies that any video component of the current block is enabled, the block-level usage flag is obtained; in response to that the block-level usage flag specifies that any video component of the current block is used, the quantization parameter is obtained, where the quantization parameter includes: the adjusted block-level quantization parameter or the frame-level best quantization parameter; and the current block of the current frame is filtered based on the quantization parameter and the network filtering model to obtain first residual information of the current block. The encoder and the decoder may determine a quantization parameter inputted to the neural network filtering model based on the adjusted frame-level quantization parameter or the frame-level best quantization parameter, both the frame-level quantization parameter and the frame-level best quantization parameter are adjusted parameters, which are different from the original quantization parameter. In this way, flexible selection and diverse change handling of the frame-level quantization parameter may be achieved without increasing complexity, and the adjustment range of each block may be different, thereby improving coding efficiency.

### BRIEF DESCRIPTION OF THE DRAWINGS

FIGS. 1A to 1C are exemplary distribution diagrams of components in different color formats provided in embodiments of the present application;
FIG. 2 is a schematic diagram of partitioning of an exemplary coding unit provided in the embodiments of the present application;
FIG. 3A is a first schematic diagram of a network architecture of an exemplary neural network model provided in the embodiments of the present application;
FIG. 3B is a composition structure of an exemplary residual block provided in the embodiments of the present application;
FIG. 4 is a second schematic diagram of a network architecture of an exemplary neural network model provided in the embodiments of the present application;
FIG. 5 is a structural diagram of an exemplary video encoding system provided in the embodiments of the present application;
FIG. 6 is a structural diagram of an exemplary video decoding system provided in the embodiments of the present application;
FIG. 7 is a schematic flowchart of a filtering method provided in the embodiments of the present application;
FIG. 8 is a schematic flowchart of another filtering method provided in the embodiments of the present application;
FIG. 9 is a schematic flowchart of yet another filtering method provided in the embodiments of the present application;
FIG. 10 is a schematic structure diagram of a decoder provided in the embodiments of the present application;
FIG. 11 is a schematic diagram of a hardware structure of a decoder provided in the embodiments of the present application;
FIG. 12 is a schematic structure diagram of an encoder provided in the embodiments of the present application;
FIG. 13 is a schematic diagram of a hardware structure of an encoder provided in the embodiments of the present application.

### DETAILED DESCRIPTION

In the embodiments of the present application, a digital video compression technology is mainly used to compress the huge digital picture video data for the convenience of transmission and storage. With the proliferation in Internet videos and people's increasing demand for video clarity, although the existing digital video compression standards can save a lot of video data, there is still need to pursue better digital video compression technology to reduce the bandwidth and traffic pressure of digital video transmission.

In the digital video encoding process, an encoder reads unequal samples for original video sequences of different color formats, including luma components and chroma components, that is, the encoder reads a monochrome picture or color picture. Then it is partitioned into blocks and the blocks are encoded by the encoder. The encoder is usually in a hybrid frame coding mode, which generally includes intra prediction, inter prediction, transformation and quantization, inverse transformation and inverse quantization, in-loop filter and entropy coding. Intra prediction only refers to information of the same frame picture, predicts sample information within the current block of partitioning, and is used to eliminate spatial redundancy; inter prediction can refer to the picture information of different frames, and use motion estimation to search motion vector information that best matchs the current block of partitioning, to eliminate temporal redundancy; transformation and quantization convert a predicted picture block to a frequency domain, redistribute the energy, and remove information that is not sensitive to the human eye combine with quantization, to eliminate visual redundancy; entropy coding can eliminate character redundancy based on a current context model and probability information of a binary bitstream; in-loop filter mainly processes samples after inverse transformation and inverse quantization to compensate for distortion information and provide a better reference for subsequent encoded samples.

At present, the scenario in which filtering processing can be performed may be a reference software test platform HPM based on AVS or a versatile video coding (VVC) reference software test platform (VVC TEST MODEL, VTM) based on VVC, which is not limited in the embodiments of the present application.

In a video picture, a first colour component, a second colour component and a third colour component are generally used to represent a current block (for example, coding block, (CB)); where the three colour components are respectively a luma component, a blue chroma component and a red chroma component, the luma component is generally represented by the symbol Y, the blue chroma component is generally represented by the symbol Cb or U, and the red chroma component is generally represented by the symbol Cr or V. In this way, the video picture can be represented in a YCbCr format, or in a YUV format, or even in an RGB format, which is not limited in the embodiments of the present application.

Digital video compression technology is mainly used to compress huge digital video data for convenience of transmission and storage. With the proliferation in Internet videos and people's increasing demand for video clarity, although the existing digital video compression standards can save a lot of video data, there is still a need to pursue better digital video compression technology to reduce the bandwidth and traffic pressure of digital video transmission. In the digital video encoding process, an encoder reads unequal samples for original video sequences of different color formats, including luma color components and chroma color components, that is, the encoder reads a monochrome picture or color picture. Then it is partitioned into blocks and the blocks are encoded by the encoder.

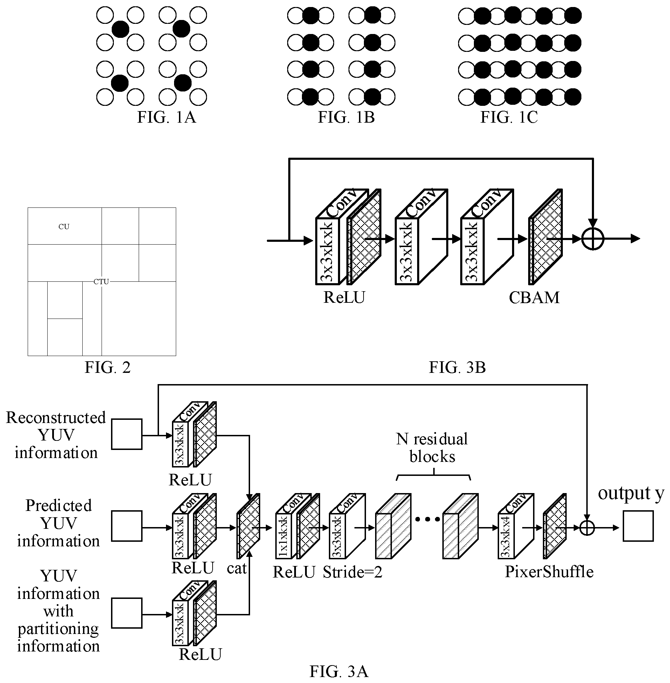

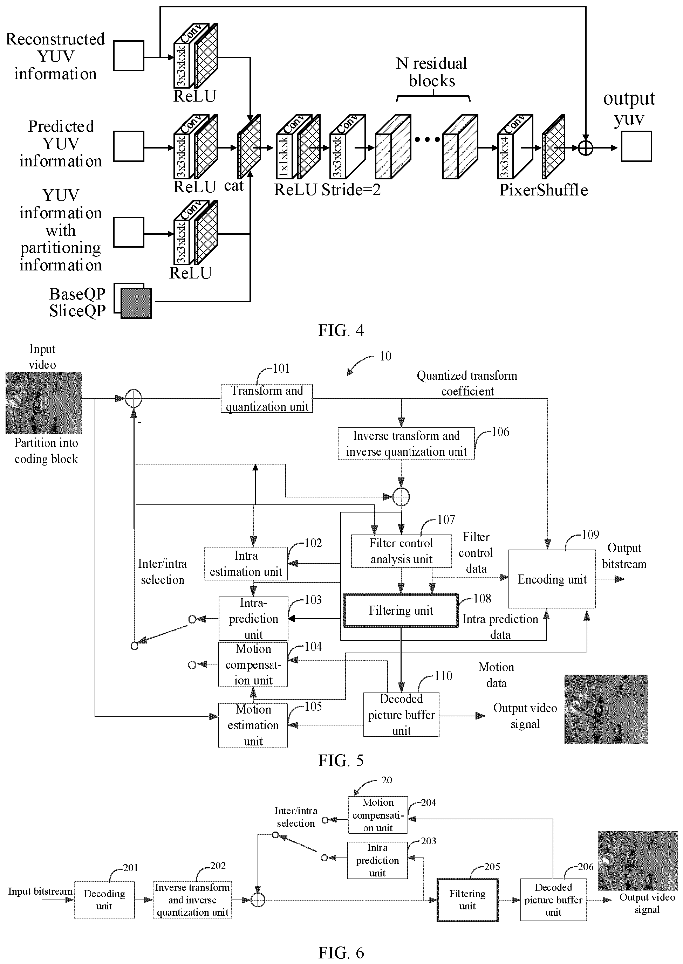

Generally, the digital video compression technology is applied to picture data whose color encoding method is the YCbCr (YUV) format. YUV ratio is generally 4:2:0, 4:2:2 or 4:4:4. Y represents luma, Cb (U) represents blue chroma, Cr (V) represents red chroma, and U and V represent chroma, to describe color and saturation. FIGS. 1A to 1C illustrate distribution diagrams of components in different colour formats, where Y component is white and the UV component is black gray. As shown in FIG. 1A, in the colour format, 4:2:0 denotes four luma components and two chroma components (YYYYCbCr) per four samples, as shown in FIG. 1 B, 4:2:2 represents four luma components and four chroma components (YYYYCbCrCbCr) per four samples, and as shown in FIG. 1C, 4:4:4 represents a full sample display (YYYYCbCrCbCrCbCrCbCr).

At present, the general video coding standards are based on block-based hybrid coding architecture. Each picture in the video is partitioned into square largest coding unit (LCUs) of the same size (such as 128×128, or 64×64), and each largest coding unit may be partitioned into rectangular coding units (CUs) according to rules. Moreover, the coding unit may be partitioned into smaller prediction units (PUs). Specifically, the hybrid coding architecuture may include modules like a prediction module, a transform module, a quantization module, an entropy coding module, an in-loop (in loop) filter module. The prediction module may include intra prediction and inter prediction, and the inter prediction may include motion estimation and motion compensation. Because there is a strong correlation between neighbouring samples in one video picture, intra prediction may eliminate the spatial redundancy between neighbouring samples in video coding technology. For inter prediction, picture information of different frames may be referenced, and motion estimation is used to search for motion vector information that best matches the current partition block, to eliminate temporal redundancy. For the transformation, the predicted picture block is transformed into the frequency domain, the energy is redistributed, and information insensitive to human eyes may be removed in combination with quantization, which is used to eliminate visual redundancy. The entropy coding may eliminate character redundancy according to the current context model and the probability information of a binary bitstream.

It should be noted that, in a video encoding process, the encoder first reads the picture information and partitions a picture into multiple coding tree units (CTUs), and one coding tree unit may be further partitioned into multiple coding units (CUs), which may be rectangular blocks or square blocks. For a specific relationship, reference may be made to FIG. 2.

In an inter prediction process, for a current coding unit, information of reference blocks of different pictures is not considered for prediction, and only the neighbouring coding units are used as reference information for prediction. That is, for the current coding block, according to a most general encoding order from left to right and from top to bottom, the top-left coding unit, the top coding unit, and the left coding unit may be used as reference information to predict the current coding block. The current coding unit is used as reference information for the next coding unit, and so forth, prediction of the whole picture is completed. If the input digital video is in the colour format, for example, the input source of the current mainstream digital video encoder is in a YUV 4:2:0 format, that is, every four samples of the picture are composed of four Y components and two UV components. The encoder encodes the Y components and the UV components respectively, and the coding tools and technologies adopted are slightly different, and meanwhile the decoder also performs decoding according to different formats.

For the inter prediction part of digital video encoding/decoding, the coding block of the current frame is mainly predicted by referring to the neighbouring picture information of the current frame, which includes: calculating a residual between a prediction block and an original picture block, and transporting residual information to the decoding side through processes such as transformation, and quantization, after obtaining the residual information. After receiving and parsing a bitstream, the decoding side obtains residual information by steps such as inverse transformation, and inverse quantization, and adds the residual information to a predicted picture block obtained by the decoding side to obtain a reconstructed picture block.

Currently common video coding standards (such as H.266/VVC) all adopt a block-based hybrid coding architecture. Each frame in the video is partitioned into square largest coding units (LCUs) of the same size (e.g., 128×128, 64×64, or the like). Each largest coding unit may be partitioned into rectangular coding units (CUs) according to a rule. The coding unit may further be partitioned into prediction units (PUs), transform units (TUs), or the like. The hybrid coding architecture includes a prediction module, a transform module, a quantization module, an entropy coding module, an in-loop filter module and other modules. The prediction module includes intra prediction and inter prediction. The inter prediction includes motion estimation and motion compensation. Since there is a strong correlation between neighbouring samples in one frame of a video, the intra prediction method is used in video coding technology to eliminate the spatial redundancy between neighbouring samples. Since there is a strong similarity between neighbouring frames of the video, the inter prediction method is used in video coding technology to eliminate the temporal redundancy between neighbouring frames, thereby improving the coding efficiency.

The basic process of video encoder/decoder is as follows. At the encoding side, a picture is partitioned into blocks, intra prediction or inter prediction is used for the current block to generate a prediction block of the current block, the original picture block of the current block is subtracted from the prediction block to obtain a residual block, the residual block is transformed and quantized to obtain a quantization coefficient matrix, and the quantization coefficient matrix is entropy encoded and output to the bitstream. At the decoding side, intra prediction or inter prediction is used to generate a prediction block of the current block. In addition, the bitstream is parsed to obtain a quantization coefficient matrix, and inverse quantization and inverse transformation are applied to the quantization coefficient matrix to obtain a residual block. The prediction block and the residual block are added together to obtain a reconstructed block. Reconstructed blocks constitute a reconstructed picture, and the reconstructed picture is subjected to in-loop filtering based on a picture or a block to obtain a decoded picture. The encoding side also needs to perform operations similar to those of the decoding side to obtain the decoded picture. The decoded picture may be used as a reference frame for inter prediction for subsequent frames. In the encoding side, the determined block partitioning information, and determined mode information or determined parameter information about prediction, transformation, quantization, entropy coding, in-loop filtering, or the like, need to be output to the bitstream if it is necessary. The decoding side determines the same block partitioning information, and mode information or parameter information about prediction, transformation, quantization, entropy coding, in-loop filtering, or the like, as the encoding side by parsing and analyzing existing information, thereby ensuring that the decoded picture obtained by the encoding side is the same as the decoded picture obtained by the decoding side. The decoded picture obtained by the encoding side is also called the reconstructed picture. The current block may be partitioned into prediction units during prediction, and may be partitioned into transformation units during transformation. The partitioning of the prediction units and the transformation units may be different. The above is the basic process of the video encoder and decoder under the block-based hybrid coding architecture. With the development of technology, some modules or steps of the architecture or process may be optimized. The current block may be a current coding unit (CU), a current prediction unit (PU), or the like.

JVET, an international video coding standards development organization, has established two exploratory experimental teams, which focus on exploratory experiments based on neural network coding and exploratory experiments beyond VVC, respectively, and has also established several corresponding expert discussion groups.

The team focus on the exploratory experiments beyond VVC aims to explore higher coding efficiency based on the latest codec standard H.266/VVC with strict performance and complexity requirements. The coding method studied by this team is closer to VVC and may be called a traditional coding method. At present, performance of an algorithm reference model of these exploratory experiments has surpassed the latest VVC reference model VTM by about 15%.

The method studied by the first exploratory experimental team is an intelligent coding method based on a neural network. Currently, deep learning and the neural network are hot topics in all walks of life, especially in the field of computer vision. Methods based on deep learning often have overwhelming advantages. Experts from the JVET standards organization brought the neural network into the field of video coding. With powerful learning ability of the neural network, coding tools based on the neural network often have very high coding efficiency. In the early stages of VVC standard formulation, many companies set their sights on deep learning-based coding tools and proposed methods including intra prediction methods based on the neural network, inter prediction methods based on the neural network, and in-loop filtering methods based on the neural network. The coding performance of the in-loop filtering method based on the neural network is the most outstanding. After many meetings for researching and exploration, the coding performance may reach more than 8%. The coding performance of the neural network based in-loop filtering scheme studied by the first exploratory experimental team was as high as 12%, which is almost enough to contribute to half a generation of coding performance.

On the basis of the exploratory experiments of the current JVET meeting, the embodiments of the present application propose an in-loop filtering enhancement solution based on the neural network. The neural network based in-loop filtering solution currently used in the JVET meeting will be introduced briefly first below, and then the improved method of the embodiment of the present application will be introduced in detail.

In the related art, exploration of in-loop filtering solutions based on the neural network is mainly focused on two forms. The first is a multi-model intra-frame switchable solution, and the second is an intra-frame non-switchable model solution. But no matter which solution is adopted, the architecture of the neural network does not change much, and the tool is used in the in-loop filtering of the traditional hybrid coding architecture. Therefore, the basic processing unit of both solutions is the coding tree unit, that is, the largest coding unit size.

A biggest difference between the first solution, i.e., the multi-model intra-frame switchable solution, and the second solution, i.e., the intra-frame non-switchable model solution is that when coding the current frame, the neural network models may be switched at will in the first solution, while the neural network model may not be switched in the second scheme. Taking the first solution as an example, when encoding a picture, each coding tree unit has multiple optional candidate neural network models. The encoder selects which neural network model is used for the current coding tree unit for the best filtering effect, and then encodes a neural network model index into the bitstream. That is, in this solution, if the coding tree unit needs to be filtered, it is necessary to first transmit a coding tree unit-level usage flag and then transmit the neural network model index. If filtering is not needed, it is only necessary to transmit the coding tree unit-level usage flag. After parsing the index value, the decoding side loads a neural network model corresponding to the index into the current coding tree unit to filter the current coding tree unit.

Taking the second solution as an example, when encoding a picture, an available neural network model for each coding tree unit of the current frame is fixed, and each coding tree unit uses the same neural network model, that is, in the second solution, there is no model selection process at the encoding side. The decoding side obtains the usage flag specifying whether the neural network based in-loop filtering is applied to the current coding tree unit by parsing. If the usage flag is true, the preset model (the same as the encoding side) is used to filter the coding tree unit. If the usage flag is false, no additional operation is performed.

For the first solution, i.e., the multi-model intra-frame switchable solution, it has strong flexibility at the coding tree unit level and may adjust the model according to local details, i.e., local optimization, to achieve a better global effect. Generally, there are many neural network models in this solution. Different neural network models are trained under different quantization parameters for JVET general test conditions, and different coding frame types may also require different neural network models to achieve better effect. Taking a filter in the related art as an example, the filter uses up to 22 neural network models to cover different coding frame types and different quantization parameters, and the model switching is performed at the coding tree unit level. This filter may provide up to 10% more coding performance based on VVC.

For the second solution i.e., the intra-frame non-switchable model solutionsolution, although this solution has two neural network models overall, the model is not switchable within a frame. In this solution, a determination is performed at the encoding side. If the current coding frame type is an I frame, the neural network model corresponding to the I frame is imported, and only the neural network model corresponding to the I frame is used in the current frame; or if the current coding frame type is a B frame, the neural network model corresponding to the B frame is imported, and similarly, only the neural network model corresponding to the B frame is used in the frame. This solution may provide 8.65% coding performance based on VVC. Although it is slightly lower than the first solution, the overall performance is almost impossible to achieve compared with traditional coding tools.

In other words, the first solution has higher flexibility and better coding performance, but it has a fatal flaw in hardware implementation. Hardware experts are concerned about the code for intra-frame model switching. Switching the model at the coding tree unit level means that in the worst case, the decoder needs to reload the neural network model every time it processes a coding tree unit. Not to mention the complexity of hardware implementation, it is an additional burden on existing high-performance graphics processing units (GPUs). In addition, the existence of multiple models also means that a large number of parameters need to be stored, which is also a huge overhead burden on current hardware implementation. However, for the second solution, the neural network in-loop filtering further explores the powerful generalization ability of deep learning. It takes various information as input instead of simply taking the reconstructed sample as the input of the model. More information provides more help for the learning of the neural network, so that the generalization ability of the model is better reflected and many unnecessary redundant parameters are removed. In the continuously updated solution, for different test conditions and quantitative parameters, only one simplified low-complexity neural network model may be used. Compared with the first solution, this solution saves the consumption of constantly reloading the model and the need to open up a larger storage space for a large number of parameters.

The neural network architecture of these two solutions will be introduced below.

As shown in FIG.3A, a schematic diagram of a network architecture of the neural network model is illustrated. As illustrated in FIG. 3A, a main structure of the network architecture may be composed of multiple residual blocks (ResBlocks). The composition structure of the residual block is illustrated in FIG. 3B. In FIG. 3B, a single residual block consists of multiple convolutional layers (Conv) connected to convolutional blocks attention module (CBAM) layers. As an attention mechanism module, CBAM is mainly responsible for further extraction of detail features. In addition, there is a direct skip connection structure between the input and output of the residual block. Here, in FIG. 3B, the multiple convolutional layers include a first convolutional layer, a second convolutional layer, and a third convolutional layer, and the first convolutional layer is connected to an activation layer. Exemplarily, the size of the first convolutional layer is 1×1×k×n, the size of the second convolutional layer is 1×1×n×k, and the size of the third convolutional layer is 3×3×k×k, and k and n are positive integers. The activation layer may include a rectified linear unit (ReLU) function, also known as a linear rectification function, which is an activation function frequently used in current neural network models. ReLU is actually a ramp function, which is simple and converges quickly.

In FIG. 3A, there is also a skip connection structure in the network architecture, which connects the input reconstructed YUV information with the output after the pixel shuffle module. The main function of Pixel Shuffle is to obtain a high-resolution feature pattern from a low-resolution feature pattern through convolution and multi-channel recombination. As an upsampling method, it may effectively amplify the reduced feature pattern. In addition, the input of the network architecture mainly includes reconstructed YUV information (rec_yuv), predicted YUV information (pred_yuv) and YUV information with partition information (par_yuv). All inputs are concatenated (Cat) after simple convolution and activation operations, and then sent to the main structure. It is worth noting that the YUV information with partition information may be processed differently in I frame and B frame, where the I frame needs to input the YUV information with partition information, while the B frame does not need to input the YUV information with partition information.

In summary, for any I frame and B frame, JVET requires common test quantization parameter points. The first solution has a corresponding neural network model. In addition, because the three color components of YUV are mainly composed of two channels of luma and chroma, they are different in color components.

As shown in FIG. 4, a schematic diagram of a network architecture of another neural network model is illustrated. As illustrated in FIG. 4, the main structure of the network architecture of the first solution is basically the same as that of the second scheme, except that the input of the second solution adds quantization parameter information as an additional input compared to the first solution. The first solution mentioned above loads different neural network models according to different quantization parameter information to achieve more flexible processing and more efficient encoding effects, while the second solution uses the quantization parameter information as the input of the network to improve the generalization ability of the neural network, so that the model may adapt to different quantization parameter conditions and provide good filtering performance.

As shown in FIG. 4, there are two quantization parameters entering the network as input, one is BaseQP and the other is SliceQP. BaseQP indicates a sequence-level quantization parameter set by the encoder when encoding a video sequence, that is, the quantization parameter point required by the JVET common test is also the parameter used to select the neural network model in the first solution. SliceQP is the quantization parameter of the current frame. The quantization parameter of the current frame may be different from the sequence-level quantization parameter. This is because in the video coding process, the quantization condition of B frame is different from that of I frame, and the quantization parameters are different at different time domain levels. Therefore, SliceQP is generally different from BaseQP in B frame. Therefore, in the related art, the input of the I frame neural network model only requires SliceQP, while the B frame neural network model requires both BaseQP and SliceQP as input.

In addition, the second scheme is different from the first scheme in one aspect. The output of the model of the first scheme generally does not require additional processing. That is, if the output of the model is residual information, the residual information is added to the reconstructed sample of the current coding tree unit to serve as the output of the neural network based in-loop filtering tool; if the output of the model is a complete reconstructed sample, the model output is the output of the neural network based in-loop filtering tool. In the second solution, the output generally needs to be scaled. Taking the residual information output by the model as an example, the model infers and outputs the residual information of the current coding tree unit. The residual information is scaled and then added to the reconstructed sample information of the current coding tree unit. The scaling factor is obtained by the encoding side and needs to be encoded into the bitstream and provided to the decoding side.

In summary, it is precisely because the quantization parameters are used as additional information for inputting, the number of models is reduced, which has become the most popular solution at the current JVET meeting. In addition, the general neural network based in-loop filtering solution may not be exactly the same as the above two solutions. The specific details of the solutions may be different, but the main ideas are basically the same. For example, the different details of the second solution may be reflected in the design of the neural network architecture, such as the convolution size of ResBlocks, the number of convolution layers, and whether the attention module is included. It may also be reflected in the input of the neural network. The input may even have more additional information, such as the boundary strength value of the deblocking effect filtering.

In the first solution, the neural network model is switchable at the coding tree unit level. Different neural network models are obtained by trainings according to different BaseQPs. The encoder attempts to use these different neural network models to search a network model with the lowest rate-distortion cost, which is the optimal network model for the current coding tree unit. Through a usage flag and network model index information at the coding tree unit level, the decoder may use the same network model as the encoder for filtering. In the second solution, the method of inputting quantization parameters may also achieve good encoding performance without switching models, which preliminarily solves the concerns about hardware implementation. However, the performance of the second solution is still not as good as the first solution. The main defect is the switching of BaseQP. The second solution has no flexibility and the encoding side has less selection, resulting in failure to achieve optimal performance.

The embodiments of the present application will be described in detail below in conjunction with the accompanying drawings.

The embodiments of the present application provide a video encoding system. FIG. 5 is a schematic structural diagram of the video encoding system provided in the embodiments of the present application. The video encoding system 10 includes: a transform and quantization unit 101, an intra estimation unit 102, an intra prediction unit 103, a motion compensation unit 104, a motion estimation unit 105, an inverse transform and inverse quantization unit 106, a filter control analysis unit 107, a filtering unit 108, an encoding unit 109 and a decoded picture buffer unit 110, etc. The filtering unit 108 may implement DBF filtering/SAO filtering/ALF filtering, and the encoding unit 109 may implement header information coding and context-based adaptive binary arithmetic coding (CABAC). For an input original video signal, a video coding block may be obtained by partitioning the coding tree unit (CTU), and then residual sample information obtained after intra prediction or inter prediction is transformed by the transformation and quantization unit 101. The transform may include transforming the residual information from the sample domain to the transform domain, and quantizing the obtained transform coefficients to further reduce the bit rate. The intra estimation unit 102 and the intra prediction unit 103 are configured to perform intra prediction on the video coding block; specifically, the intra estimation unit 102 and the intra prediction unit 103 are configured to determine the intra prediction mode to be used to encode the video coding block. The motion compensation unit 104 and the motion estimation unit 105 are configured to perform inter prediction coding on a received video coding block relative to one or more blocks in one or more reference pictures to provide time prediction information. The motion estimation performed by the motion estimation unit 105 is a process of generating a motion vector, and the motion vector can estimate the motion of the video coding block, and then the motion compensation unit 104 performs motion compensation based on the motion vector determined by the motion estimation unit 105. After determining the intra prediction mode, the intra prediction unit 103 is further configured to provide selected intra prediction data to the encoding unit 109, and the motion estimation unit 105 also sends the calculated motion vector data to the encoding unit 109. In addition, the inverse transform and inverse quantization unit 106 is configured to reconstruct the video coding block, which includes: reconstructing the residual block in the sample domain, and providing the reconstructed residual block to the filter control analysis unit 107 and the filtering unit 108 to remove a blocking artifact, and adding the reconstructed residual block to a predictive block in a picture in the decoded picture buffer 110, to produce a reconstructed video coding block. The encoding unit 109 is configured to encode various coding parameters and quantized transform coefficients. In the CABAC-based coding algorithm, context content may be based on neighbouring coding blocks. The encoding unit 109 may be further configured to encode information indicating the determined intra prediction mode and output a bitstream of the video signal. The decoded picture buffer unit 110 is configured to store the reconstructed video coding block for prediction reference. As video picture encoding progresses, new reconstructed video coding blocks are generated continuously, and these reconstructed video coding blocks are stored in the decoded picture buffer unit 110.

The embodiments of the present application provide a video decoding system. And FIG. 6 is a schematic structural diagram of the video decoding system provided in the embodiments of the present application. The video decoding system 20 includes: a decoding unit 201, an inverse transform and inverse quantization unit 202, an intra prediction unit 203, a motion compensation unit 204, a filtering unit 205 and a decoded picture buffer unit 206, or the like. The decoding unit 201 may implement header information decoding and CABAC decoding, and the filtering unit 205 may implement DBF filtering/SAO filtering/ALF filtering. After the input video signal is encoded as shown in FIG. 3A, the bitstream of the video signal is output; the bitstream is input to the video decoding system 20, and first passes through the decoding unit 201 to obtain decoded transform coefficients. The transform coefficients are processed by the inverse transform and inverse quantization unit 202, to generate residual blocks in the sample domain. The intra prediction unit 203 may be configured to generate prediction data for the current video decoding block based on the determined intra prediction mode and the data of the decoded blocks from the current frame or picture. The motion compensation unit 204 is configured to determine the prediction information for the video decoding block by analyzing the motion vector and other associated syntax elements, and generate the prediction block of the video decoding block being decoded using the prediction information. The decoded video block is formed by summing the residual block from the inverse transform and inverse quantization unit 202 and the corresponding prediction block generated by the intra prediction unit 203 or the motion compensation unit 204. The decoded video signal passes through the filtering unit 205 to remove the blocking effect artifacts, which may improve the video quality, then the decoded video block is stored in the decoded picture buffer unit 206 which stores the reference picture used for subsequent intra prediction or motion compensation and also used for output of the video signal. That is, the restored original video signal is obtained.

It should be noted that the filtering method provided in the embodiments of the present application may be applied to the filtering unit 108 part shown in FIG. 5 (denoted by a black bold box), as well as the filtering unit 205 shown in FIG. 6 (denoted by a black bold box). That is to say, the filtering method in the embodiments of the present application may be applied to a video encoding system (referred to as "encoder") or a video decoding system (referred to as "decoder"), and may even be applied to both the video encoding system and the video decoding system, which is not limited here.

The embodiments of the present application may provide more selectivity and possibilities for the encoder by adjusting the input parameters on the basis of the intra-frame non-switchable model solution. For example, the input parameters of the network filtering model include quantization parameters, and the quantization parameters include a sequence-level quantization parameter (BaseQP) or a frame-level quantization parameter (SliceQP). The BaseQP and SliceQP used as input are adjusted to provide multiple options for the encoder. The adjustment range is determined based on a coding tree unit level or a coding unit level, to make the encoder and decoder have more options to attempt, thereby improving the encoding and decoding efficiency.

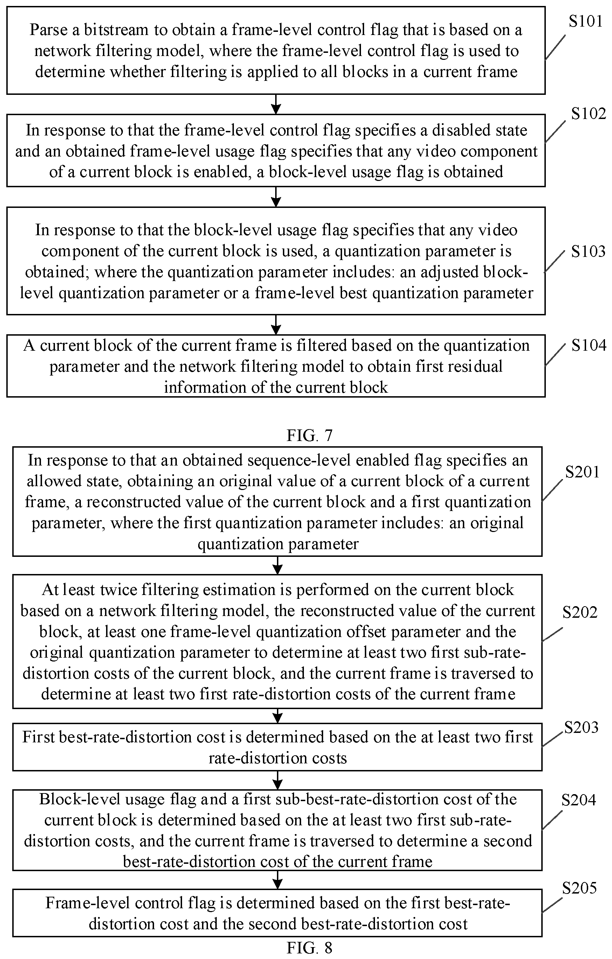

The embodiments of the present application provide a filtering method, which is applied to a decoder. As shown in FIG. 7, the method may include:
S101, parsing a bitstream to obtain a frame-level control flag that is based on a network filtering model, where the frame-level control flag is used to determine whether filtering is applied to all blocks in a current frame.

In the embodiments of the present application, an in-loop filtering method that is based on a neural network model may be applied. Specifically, the method may be a method obtained based on a neural network model to which multiple quantization parameter input.

At a decoding side, the decoder uses intra prediction or inter prediction for the current block to generate a prediction block of the current block, and, the decoder parses the bitstream to obtain a quantization coefficient matrix, performs inverse transformation and inverse quantization on the quantization coefficient matrix to obtain a residual block, adds the prediction block and the residual block to obtain a reconstructed block. The reconstructed picture is composed of reconstructed blocks. The decoder performs in-loop filtering on the reconstructed picture based on a picture or a block to obtain a decoded picture.

It should be noted that, since an original picture may be partitioned into CTUs (coding tree units), or be partitioned into CUs from the CTUs, the filtering method of the embodiments of the present application may be applied not only to CU-level loop filtering (at this time, block partitioning information is CU partitioning information), but also to CTU-level loop filtering (at this time, the block partitioning information is the CTU partitioning information), and the embodiments of the present application does not make specific limitations.

That is to say, in the embodiments of the present application, the block may refer to the CTU or the CU, which is not limited in the embodiments of the present application.

In the embodiments of the present application, during a process that the decoder performs in-loop filtering on the reconstructed picture of the current frame, the decoder may first parse out a sequence-level enabled flag (sps_nnlf_enable_flag) by parsing the bitstream, i.e., first syntax element flag information. The sequence-level enabled flag is a control/switch for determining whether to enable the filtering function for an entire video sequence to be processed. Here, the first syntax element flag information may determine whether to enable the filtering function for the entire video sequence to be processed.

It should be noted that, for the first syntax element flag information (sps_nnlf_enable_flag), it may be determined by decoding a value of the flag information. In some embodiments, the decoder may parse the bitstream to determine the first syntax element flag information of the video sequence to be processed. In detail, the decoder may obtain a value of the first syntax element flag information.

In some embodiments of the present application, if the value of the first syntax element flag information is a first value, it is determined that the first syntax element flag information indicates that the filtering function is enabled for the video sequence to be processed; if the value of the first syntax element flag information is a second value, it is determined that the first syntax element flag information indicates that the filtering function is not enabled for the video sequence to be processed.

In the embodiments of the present application, the first value and the second value are different, and the first value and the second value may be in a form of parameters or a form of numbers. Specifically, the first syntax element flag information may be a parameter written in a profile, or may be a value of a flag, which is not specifically limited here.

Exemplarily, taking a flag as an example, there are two ways to set the flag: enable flag (enable_flag) and disable flag (disable _flag) Assume that a value of the enable flag is the first value, and a value of the disable flag is the second value, then for the first value and the second value, the first value may be set to 1 and the second value may be set to 0, or the first value may also be set to true and the second value may also be set to false, which is not specifically limited in the embodiments of the present application.

In some embodiments of the present application, when the sequence-level enabled flag specifies an allowed state, the decoder parses syntax elements of the current frame to obtain a frame-level control flag (i.e., second syntax element flag information) and a frame-level usage flag (i.e., third syntax element flag information) based on a network filtering model.

The frame-level usage flag is a flag that is used to specify whether filtering is enabled for the current frame. In a case where the frame-level usage flag specifies an enabled state, it specifies that some or all blocks of the current frame need to be filtered, while in a case where the frame-level usage flag specifies an disabled state, it specifies that all blocks of the current frame do not need to be filtered. The decoder may continue to traverse other filtering methods to output a complete reconstructed picture.

In some embodiments of the present application, if a value of the second syntax element flag information is a first value, it is determined that the second syntax element flag information indicates that filtering is applied to the current frame; if the value of the second syntax element flag information is a second value, it is determined that the second syntax element flag information indicates that filtering is not applied to the current frame.

It should be noted that, it is default that related syntax element flag information is an initial value or is set to a false (negative) state, i.e., the second value.

In some embodiments of the present application, for a frame-level usage flag of the current frame may be represented by one or more flags. In a case where it is represented by multiple flags, different video components of the current frame may correspond to a frame-level usage flag. In a case where the video component is a color component, different color components of the current frame may correspond to a frame-level usage flag, respectively, that is, a frame-level usage flag of a color component. The frame-level usage flag of the color component specifies whether filtering is enabled for a block of the current frame under the color component.

It should be noted that the decoder traverses a frame-level usage flag of each color component of the current frame to determine whether filtering is applied to blocks under each color component.

In some embodiments of the present application, the frame-level control flag is used to determine whether filtering is applied to all blocks of the current frame. In some embodiments of the present application, if a value of the third syntax element flag information is a first value, it is determines that the third syntax element flag information specifies that filtering is applied to each block of the current frame. If the value of the third syntax element flag information is a second value, it is determining that the third syntax element flag information specifies that: the neural network based in-loop filtering technology is applied to some blocks of the current frame, and the neural network based in-loop filtering technology is not applied to other blocks, and it is necessary to further parse the block-level usage flags of all blocks of the current frame.

Each video component may correspond to its own frame-level control flag. In a case where the video component is a color component, the frame-level control flag may further indicate whether the filtering of the neural network based in-loop filtering technology is applied to all blocks under the current color component.

In the embodiments of the present application, if the frame-level control flag is "enabled", it indicates that the filtering of the neural network based in-loop filtering technology is applied to all blocks under the current color component, that is, the block-level usage flag of all blocks of the current frame under the color component is automatically set to a used state; if the frame-level control flag is "disabled", it indicates that the neural network based in-loop filtering technology is applied to some blocks under the current color component, and the neural network based in-loop filtering technology is not applied to other blocks under the current color component. If the frame-level control flag is "disabled", it is necessary to further parse block-level usage flags of all blocks of the current frame under the color component.

It should be noted that the color component may include at least one of the following: a first color component, a second color component, or a third color component. The first color component may be a luma component, and the second color component and the third color component may be color components (e.g., the second color component is a blue chroma component, and the third color component is a red chroma component; or, the second color component is a red chroma component, and the third color component is a blue chroma component).

Exemplarily, if the color component is a luma component, the second syntax element flag information may be ph_nnlf_luma_enable_flag, and the third syntax element flag information may be ph_nnlf_luma_ctrl_flag. If the color component is a chroma component, the second syntax element flag information may be ph_nnlf_chroma_enable_flag, and the third syntax element flag information may be ph_nnif_chroma_ctrl_flag. That is, for different color components in the current frame, different second syntax element flag information and third syntax element flag information are correspondingly set.

S102, in response to that the frame-level control flag specifies a disabled state and an obtained frame-level usage flag specifies that any video component of a current block is enabled, a block-level usage flag is obtained.

In the embodiments of the present application, in response to that the frame-level control flag specifies the disabled state, and the obtained frame-level usage flag specifies that any video component of the current block is enabled, the decoder may parse out the block-level usage flag from the bitstream.

It should be noted that the block-level usage flag is a flag of whether filtering is applied to the block to be processed corresponding to the current frame. In a case where the block-level usage flag specifies an enabled state, it indicates that filtering is applied to the current block ; and in a case where the block-level usage flag specifies a disabled state, it indicates that filtering is not applied to the current block.

In the embodiments of the present application, the decoder may parse the bitstream to determine fourth syntax element flag information of the current block. Specifically, the decoder may obtain a value of the fourth syntax element flag information.

In some embodiments of the present application, if the value of the fourth syntax element flag information is a first value, it is determined that the fourth syntax element flag information indicates that filtering is applied to the current block; if the value of the fourth syntax element flag information is a second value, it is determined that the fourth syntax element flag information indicates that filtering is not applied to the current block.

In the embodiments of the present application, the frame-level usage flag specifies that any video component of the current block is enabled means that, as long as a frame-level usage flag corresponding to any video component (e.g., any colour component) is enabled, the block-level usage flag is obtained.

It should be noted that the frame-level control flag, that is "disabled", is a frame-level control flag corresponding to a video component of which the frame-level usage flag is "enabled".

In some embodiments of the present application, the block-level usage flag of the current block includes a block-level usage flag corresponding to each color component (video component). In a case where the video component is the color component, the block-level usage flag may further specify whether filtering of the network based in-loop filtering technology is applied to the current block under the current color component.

In the embodiments of the present application, if the block-level usage flag is "used", it indicates that filtering of the network based in-loop filtering technology is applied to the current block under the current color component; if the block-level usage flag is unused, it indicates that filtering of the network based in-loop filtering technology is not applied to the current block under the current color component.

It should be noted that, the block-level usage flag, i.e., the fourth syntax element flag information, may be represented by ctb_nnlf_luma_flag (corresponding to the luma component) and ctb_nnlf_chroma_flag (corresponding to the chroma component) for different color components.

In some embodiments of the present application, if the value of the fourth syntax element flag information is a first value, it is determined that the fourth syntax element flag information indicates that network filtering is applied to the current block; if the value of the fourth syntax element flag information is a second value, it is determined that the fourth syntax element flag information indicates that network filtering is not applied to the current block.

It should be noted that, in response to that the frame-level control flag is "disabled", the frame-level usage flag may be parsed out from the bitstream.

Exemplarily, for the luma component, in a case where ph_nnlf_luma_ctrl_flag is "disabled", ph_nnlf_luma_enable_flag in the bitstream is parsed. If (ph_nnlf_luma_enable_flag) is "enabled", for (traverse all ctbs), ctb_nnlf_luma_flag is parsed. For the chroma component, in a case where ph_nnlf_chroma_ctrl_flag is "disabled", the ph_nnlf_chroma_enable_flag in the bitstream is parsed. If (ph_nnlf_chroma_enable_flag) is "enabled", for (traverse all ctbs), ctb_nnlf_chroma_flag is parsed.

S103, in response to that the block-level usage flag specifies that any video component of the current block is used, a quantization parameter is obtained; where the quantization parameter includes: an adjusted block-level quantization parameter or a frame-level best quantization parameter.

In the embodiments of the present application, in response to that the block-level usage flag specifies that any video component of the current block is used, the quantization parameter is obtained; where the quantization parameter includes: the adjusted block-level quantization parameter or the frame-level best quantization parameter.

It should be noted that, in the embodiments of the present application, in a case where the decoder performs decoding, it performs decoding operations on each color component of the current frame, in response to that a frame-level usage flag corresponding to one color component is enabled, but a frame-level start flag corresponding to the color component is not enabled, the decoder parses a block-level usage flag corresponding to the color component, if the block-level usage flag specifies a used state, the decoder obatins the quantization parameter; where the quantization parameter includes: the adjusted block-level quantization parameter or the frame-level best quantization parameter.

In the embodiments of the present application, for the current block, as long as a block-level usage flag corresponding to any color component specifies a used state, the decoder needs to filter the current block to obtain residual information corresponding to each color component. Therefore, for the current block, as long as the block-level usage flag corresponding to any color component specifies the used state, it is necessary to obtain the quantization parameter for filtering.

In some embodiments of the present application, the decoder may obtain the quantization parameter. Specifically, the decoder obtains a block-level quantization parameter offset index from the bitstream; and obtains the adjusted block-level quantization parameter based on the block-level quantization parameter offset index.

In some embodiments of the present application, the decoder obtains the block-level quantization parameter offset index based on the bitstream, where the block-level quantization parameter offset index may directly correspond to a block-level input parameter.

It should be noted that the block-level quantization offset index parsed by the decoder from the bitstream corresponds to the adjusted block-level quantization parameter, certainly, it may also correspond to an unadjusted block-level quantization parameter, which is depended on an actual parsed result and not limited in the embodiments of the present application. This is determined by whether the block-level quantization parameter was adjusted during encoding.

In some embodiments of the present application, the decoder may further determine the block-level quantization offset parameter based on the block-level quantization parameter offset index obtained from the bitstream, and determine the adjusted block-level quantization parameter according to an original quantization parameter (e.g., BaseQP or SliceQP) obtained from the bitstream and the block-level quantization offset parameter. The block-level quantization parameter offset index is fifth syntax element flag information, such as represented by ctb_nnlf_qp_index.

It should be noted that, in the embodiments of the present application, if the frame-level control flag is the second value (i.e., "disabled") and the frame-level usage flag is "enabled", for each block of the current frame, the decoder needs to parse the block-level usage flag in the bitstream, i.e., the fourth syntax element flag information. In response to that the fourth syntax element flag information specifies that any video component of the current block is used, the decoder parse the fifth syntax element flag information in the bitstream for the subsequent filtering process.

It should be noted that, in a case where the block-level usage flag specifies that any video component of the current block is used, i.e., if (ph_nnlf luma enable flag ∥ ph_nnlf_chroma_enable_flag), for the current block of the current frame, the decoder may parse the fifth syntax element flag information from the bitstream, such as ctb _nnlf_qp_index. The decoder handles other blocks in the same principle, which will not be repeated here.

In some embodiments of the present application, adjustment ranges of all blocks of the current frame may be partially the same, or may be different, which is not limited in the embodiments of the present application.

It should be noted that, during encoding, the encoder will attempt to adjust block-level original quantization parameters to obtain different candidate quantization parameters, to determine whether the quantization parameter need to be adjusted. If the adjustment is required, serial numbers corresponding to the adjusted block-level quantization offset parameters will be input to the bitstream as the block-level quantization adjustment indexes. The decoder stores correspondences between the serial numbers and quantization offset parameters. In this way, the decoder may determine the block-level quantization offset parameter based on the block-level quantization adjustment index. The decoder adjusts the block-level quantization parameter using the block-level quantization offset parameter and the original quantization parameter, to obtain the adjusted block-level quantization parameter. The original quantization parameter may be obtained from the bitstream.

It should be noted that, the adjusted block-level quantization parameter obtained by the decoder may be the block-level quantization offset parameter corresponding to the block-level quantization parameter index parsed from the bitstream, and continue to superpose block-level quantization offset parameters corresponding to different blocks based on the quantization parameters to obtain the adjusted block-level quantization parameter corresponding to the current block. Then, filtering is performed on the current block of the current frame based on the adjusted block-level quantization parameter and the network filtering model, to obtain first residual information of the current block.

In the embodiments of the present application, the adjustments between different blocks may be different, that is, the inputting of quantization parameters of different blocks may be different.

Exemplarily, if the block-level quantization parameter of the current frame is adjusted, the decoder may adjust the original quantization parameter according to the block-level quantization parameter index. For example, if the block-level quantization parameter index points to offset1, BaseQP is superimposed with the offset parameter offset1 to obtain BasseQPFinal, which replaces BaseQP as an adjusted quantization parameter of the current block of the current frame, and is inputted to the network filtering model.

It should be noted that the decoder may further parse and obtain an unadjusted block-level quantization parameter, which is depended on the actual parsing result and not limited in the embodiments of the present application. This is determined by whether the block-level quantization parameter was adjusted during encoding.

In some embodiments of the present application, the method for obtaining the quantization parameter by the decoder may further include: obtaining, by the decoder, the frame-level best quantization parameter.

It should be noted that the frame-level best quantization parameter is an optimal quantization parameter of the current frame calculated by the encoder. For the filtering, which is based on the frame-level best quantization parameter as an input and is performed using the network filtering model, during decoding, the decoder may directly parse the bitstream, to obtain the frame-level best quantization parameter, or obtain a quantization parameter difference value, and obtain the frame-level best quantization parameter based on a combination of the quantization parameter difference value and the original quantization parameter, which is not limited in the embodiments of the present application.

In some embodiments of the present application, the encoder may directly transfer the frame-level best quantization parameter or the quantization parameter difference value to the decoder through the bitstream for decoding by the decoder.

It should be noted that, for the current block, as long as the block-level usage flag corresponding to any color component specifies a used state, the decoder needs to filter the current block to obtain residual information corresponding to each color component. Therefore, for the current block, as long as the block-level usage flag corresponding to any color component specifies the used state, it is necessary to obtain the quantization parameter for filtering.

S104, a current block of the current frame is filtered based on the quantization parameter and the network filtering model to obtain first residual information of the current block.

In the embodiments of the present application, after the decoder obtains the block-level quantization parameter, since the frame-level control flag specifies the disabled state and the obtained frame-level usage flag specifies that any video component of the current block is used, the decoder needs to obtain the block-level usage flag, and then determines whether to perform filtering on the current block. In a case where it is determined that filtering is required, the decoder may filter the current block of the current frame according to an obtained quantization parameter and the network filtering model, to obtain the first residual information of the current block.

The first residual information includes residual information corresponding to each color component. The decoder determines, according to the block-level usage flag corresponding to each color component, a reconstructed value of the color component of the current block. If the block-level usage flag corresponding to the color component is used, a target reconstructed value corresponding to the color component is a sum of the reconstructed value of the color component of the current block and residual information of a filtering output under the color component. If the block-level usage flag corresponding to the color component is used, the target reconstructed value corresponding to the color component is the reconstructed value of the color component of the current block.

In the embodiments of the present application, the decoder obtains a reconstructed value of the current block before filtering the current block of the current frame based on the quantization parameter and the network filtering model to obtain the first residual information of the current block. The decoder filters the reconstructed value of the current block using the network filtering model and in combination with the quantization parameter to obtain the first residual information of the current block, to complete filtering of the current block.

It can be understood that, the decoder may determine the quantization parameter that inputted to the neural network filtering model based on the adjusted block-level quantization parameter or the frame-level best quantization parameter. As the block-level quantization parameter or frame-level best quantization parameter is an adjusted parameter, which is different from the original quantization parameter, flexible selection and diverse change handling of the block-level quantization parameter may be achieved, and the adjustment range of each block may be different, thereby improving encoding efficiency.

In some embodiments of the present application, before filtering the current block of the current frame based on the quantization parameter and the network filtering model to obtain the first residual information of the current block, the decoder may further obtain a reconstructed value of the current block and at least one of a prediction value of the current block, block partitioning information of the current block or a deblocking filtering boundary strength of the current block.

In some embodiments of the present application, the decoder filters the reconstructed value of the current block using the network filtering model and in combination with the quantization parameter and the at least one of the prediction value of the current block, the block partitioning information of the current block or the deblocking filtering boundary strength of the current block, to obtain the first residual information of the current block, to complete filtering of the current block.

That is, the decoder obtains the reconstructed value of the current block and at least one of the prediction value of the current block, the block partitioning information of the current block or the deblocking filtering boundary strength of the current block; in response to that the frame-level control flag specifies the disabled state and the obtained frame-level usage flag specifies that any video component of the current block is enabled, the decoder obtains the block-level usage flag; in response to that the block-level usage flag specifies that any video component of the current block is used, the decoder obtains the adjusted block-level input parameter, where the adjusted block-level input parameter includes: an adjusted parameter of any one of the prediction value, the block partitioning information and the deblocking filtering boundary strength; finally, the decoder filters the current block of the current frame based on the adjusted block-level input parameter, an obtained original quantization parameter and the network filtering model, to obtain third residual information of the current block.

It should be noted that, during a filtering process, input parameters inputted to the network filtering model may include: the prediction value of the current block, the block partitioning information of the current block, the deblocking filtering boundary strength of the current block, the reconstructed value of the current block, and the quantization parameter in the present application, the information types of the input parameters are not limited in the present application. However, the prediction value of the current block, the block partitioning information of the current block and the deblocking filtering boundary strength of the current block may not be required every filtering, which is determined based on an actual condition.

In some embodiments of the present application, after filtering the current block of the current frame based on the quantization parameter and the network filtering model to obtain the first residual information of the current block, the decoder obtains a second residual scaling factor from the bitstream; the decoder scales the first residual information of the current block based on the second residual scaling factor to obtain first target residual information; in response to that the block-level usage flag indicates specifies a used state, the decoder determines a first target reconstructed value of the current block based on the first target residual information and the reconstructed value of the current block. In response to that the block-level usage flag specifies an unused state, the decoder determines the reconstructed value of the current block as the first target reconstructed value.

It should be noted that, in a case where the first residual information is obtained, the encoder scales the first residual information using the second residual scaling factor to obtain the scaled first residual information. Therefore, the decoder needs to scale the first residual information of the current block based on the second residual scaling factor to obtain the first target residual information, in response to that the block-level usage flag specifies the used state, a first target reconstructed value of the current block is determined based on the first target residual information and the reconstructed value of the current block. However, if the encoder does not use a residual factor during encoding, but needs to input the quantization parameter during filtering, the filtering method provided in the embodiments of the present application is also applicable, except that the first residual information does not need to be scaled using the residual factor.

It should be noted that each color component has corresponding residual information and a corresponding residual factor.

In some embodiments of the present application, during a filtering process of coding, a portion of data in the input parameter inputted to the network filtering model may be adjusted by using the aforementioned principles before filtering, which is not limited in the embodiments of the present application.

In the embodiments of the present application, at least one of the quantization parameter, the prediction value of the current block, the block partitioning information of the current block or the deblocking filtering boundary strength of the current block in the input parameters may be adjusted, which is not limited in the embodiments of the present application.

Exemplarily, if block-level usage flags of all color components of the current block are not all unused, a current coding tree unit is filtered by using a neural network based in-loop filtering technology, which takes a reconstructed sample YUV of the current block, a predicted sample YUV of the current block, partitioning information YUV of the current block and quantization parameter information as input, to obtain residual information of the current block. The quantization parameter information is obtained by adjusting an index according to a block-level quantization parameter, or is a frame-level best quantization parameter calculated by the encoder. The decoder may further scale the residual information, the residual scaling factor has been obtained by parsing the bitstream by the decoder, and scaled residual is superimposed on a reconstructed sample to obtain the reconstructed sample YUV after the neural network based in-loop filtering. According to the block usage flag of each color component of the current block, the reconstructed sample is selected as an output of the neural network based in-loop filtering technology. If the block-level usage flag of the corresponding color component is used, the reconstructed sample of the corresponding color component after the neural network based in-loop filtering is used as the output; otherwise, the reconstructed sample without the neural network based in-loop filtering is used as the output of the color component. After traversing all the blocks of the current frame, a neural network based in-loop filtering module ends. It should be noted that the decoding side may further continue to traverse other in-loop filtering technologies and output a complete reconstructed picture after completing filtering.

It should be understood that the decoder may determine the quantization parameter inputted to the neural network filtering model based on the adjusted block-level quantization parameter or the frame-level best quantization parameter, both the block-level quantization parameter and the frame-level best quantization parameter are adjusted parameters, which are different from the original quantization parameter. In this way, flexible selection and diverse change handling of the block-level quantization parameter may be achieved, and the adjustment range of each block may be different, thereby improving encoding efficiency.

In some embodiments of the present application, the filtering method provided by the embodiments of the present application may further include:
S101, parsing a bitstream to obtain a frame-level control flag that is based on a network filtering model, where the frame-level control flag is used to determine whether filtering is applied to all blocks of a current frame.

It should be noted that S101 has been described above, which will not be repeated here.

S105, in response to that the frame-level control flag specifies an enabled state, a frame-level quantization parameter is obtained, where the frame-level quantization parameter includes: an adjusted frame-level quantization parameter or a frame-level best quantization parameter.

In the embodiments of the present application, in a case where the frame-level quantization parameter is an adjusted frame-level quantization parameter, a method for obtaining the frame-level quantization parameter by the decoder: determining a frame-level quantization offset parameter based on a frame-level quantization parameter offset index obtained from the bitstream, and determining the adjusted frame-level quantization parameter according to an obtained original quantization parameter and the frame-level quantization offset parameter.

It should be noted that in response to that the frame-level control flag specifies the enabled state, the decoder obtains the frame-level quantization parameter. The decoder may obtain the frame-level quantization parameter offset index from the bitstream, and determine the adjusted frame-level quantization parameter based on the frame-level quantization parameter offset index.

Adjustment ranges of all blocks of the current frame are the same, that is, inputs of the adjusted frame-level quantization parameters of all blocks are the same.

It should be noted that during encoding, if it is determined that the frame-level quantization parameter needs to be adjusted, the encoder will take a serial number corresponding to the frame-level quantization offset parameter as the frame-level quantization parameter offset index input to the bitstream. The decoder stores correspondence between the serial number and the quantization offset parameter. In this way, the decoder may determine the frame-level quantization offset parameter based on the frame-level quantization parameter offset index. The decoder adjusts the original quantization parameter using the frame-level quantization offset parameter, to the adjusted frame-level quantization parameter. The original quantization parameter may be obtained from the bitstream.

Exemplarily, if the frame-level quantization parameter of the current frame has been adjusted, the original quantization parameter is adjusted according to the frame-level quantization parameter offset index. For example, if the frame-level quantization parameter offset index points to offset1, BaseQP is superimposed with the offset parameter offset1 to obtain BasseQPFinal, which replaces BaseQP as a frame-level quantization parameter of all coding tree units of the current frame, and is inputed to the network model.

In some embodiments of the present application, in response to that the frame-level control flag specifies an enabled state, the frame-level quantization parameter may further be the frame-level best quantization parameter, which is an optimal quantization parameter of the current frame calculated by the encoder. For the filtering which is based on the frame-level best quantization parameter as input and using the network filtering model, during decoding, the decoder may directly parse the bitstream to obtain the frame-level best quantization parameter, or obtain a quantization parameter difference value, and obtain the frame-level best quantization parameter based on a combination of the quantization parameter difference value and the original quantization parameter, which is not limited in the embodiments of the present application.

In some embodiments of the present application, the encoder may directly transfer the frame-level best quantization parameter or the quantization parameter difference value to the decoder through the bitstream for decoding by the decoder.

It should be noted that, in the bitstream, the frame-level quantization parameter offset index (e.g., ph _nnlf_qp_index), the frame-level best quantization parameter or the quantization parameter difference value is represented by sixth syntax element flag information.

It should be noted that, in the embodiments of the present application, if frame-level control flags are not all the second value (i.e., "disabled"), a value of the frame-level usage flag may be parsed or directly assigned according to a condition of the frame-level control flag. If the frame-level control flag is "enabled", the frame-level usage flag is "enabled".

For example, if (ph_nnlf_luma_ctrl_flag ∥ ph_nnlf_chroma_ctrl_flag), ph_nnlf_luma_enable_flag = ph_nnlf_luma_ctrl_flag, ph_nnlf_luma_chroma_flag = ph_nnlf_chroma_ctrl_flag.

It should be noted that in a case where the frame-level control flag specifies the enabled state, it indicates that the frame-level usage flag is "enabled", then the decoder may parses the sixth syntax element flag information from the bitstream to obtain the frame-level quantization parameter.

S106, the current block of the current frame is filtered based on the frame-level quantization parameter and the network filtering model to obtain second residual information of the current block.

In the embodiments of the present application, after the decoder obtains the frame-level quantization parameter, since the frame-level control flag specifies the enabled state, the decoder may filter all blocks of the current frame. For filtering of one block, it is necessary to traverse the filtering of each color component before decoding the next block.

It should be noted that in a case where the decoder parses out that the frame-level control flag specifies the enabled state, the frame-level usage flag is "enabled", so that the filtering will be applied to all blocks of the current frame, that is, the block-level usage flags are all "used", and in this case, the block-level quantization parameters are all frame-level quantization parameters.

For example, for (traverse all ctbs), ctb_nnlf_luma_flag = ph_nnlf_luma_ctrl_flag, ctb_nnlf_chroma_flag = ph_nnlf_chroma_ctrl_flag, ctb_nnlf_qp_index = ph nnlf qp_index.

In the embodiments of the present application, the decoder filters the reconstructed value of the current block using the network filtering model and in combination with the adjusted frame-level quantization parameter to obtain the second residual information of the current block, so as to complete the filtering of the current block.

In the embodiments of the present application, before filtering the current block of the current frame based on the frame-level quantization parameter and the network filtering model to obtain the second residual information of the current block, the decoder obtains the reconstructed value of the current block. The decoder filters the reconstructed value of the current block using the network filtering model and in combination with the frame-level quantization parameter to obtain the second residual information of the current block, so as to complete filtering of the current block.

In some embodiments of the present application, the decoder may further obtain the reconstructed value of the current block and at least one of a prediction value of the current block, block partitioning information of the current block or a deblocking filtering boundary strength of the current block.

In some embodiments of the present application, the decoder may further filters the reconstructed value of the current block using the network filtering model and in combination with the quantization parameter and at least one of the prediction value of the current block, the block partitioning information of the current block or the deblocking filtering boundary strength of the current block, to obtain the second residual information of the current block, so as to complete filtering of the current block.

In some embodiments of the present application, after filtering the current block of the current frame based on the frame-level quantization parameter and the network filtering model to obtain the second residual information of the current block, the decoder may further obtain a second residual scaling factor from the bitstream; scale the second residual information of the current block based on the second residual scaling factor to obtain the second target residual information; determine a second target reconstructed value of the current block based on the second target residual information and the reconstructed value of the current block.

It should be noted that, in a case where the second residual information is obtained, the encoder scales the second residual information using the second residual scaling factor to obtain scaled second residual information. Therefore, the decoder needs to scale the second residual information of the current block based on the second residual scaling factor to obtain the second target residual information, and determine the second target reconstructed value of the current block based on the second target residual information and the reconstructed value of the current block. However, if the encoder does not use a residual factor during encoding, but needs to input the quantization parameter during filtering, the filtering method provided in the embodiments of the present application is also applicable, except that the second residual information does not need to be scaled using the residual factor.

It should be noted that the decoding side continues to traverse other in-loop filtering technologies and outputs a complete reconstructed picture after completing filtering.

It can be understood that the decoder may determine the quantization parameter inputted to the neural network filtering model based on the adjusted frame-level quantization parameter or the frame-level best quantization parameter, both the frame-level quantization parameter and the frame-level best quantization parameter are adjusted parameters, which are different from the the original quantization parameter. In this way, flexible selection and diverse change handling of the frame-level quantization parameter may be achieved, and the adjustment range of each block may be different, thereby improving encoding efficiency.

The embodiments of the present application provide a filtering method, which is applied to an encoder. As shown in FIG. 8, the method may include:
S201, in response to that an obtained sequence-level enabled flag specifies an allowed state, obtaining an original value of a current block of a current frame, a reconstructed value of the current block and a first quantization parameter, where the first quantization parameter includes: an original quantization parameter.

In the embodiments of the present application, the encoder traverses intra prediction or inter prediction to obtain a prediction block of each coding unit, and obtains residual of a coding unit by making a difference between the original picture block and the prediction block. The encoder obtains a frequency domain residual coefficient by processing the residual via various transformation modes, then obtains distortion residual information by performing quantization, inverse quantization and inverse transformation on the frequency domain residual coefficient, and superimposes the distortion residual information with the prediction block to obtain a reconstructed block of the current block. After a picture has been encoded, an in-loop filtering module filters the picture using a coding tree unit level as a basic unit. The coding tree unit may be described as a block in the embodiments of the present application, but the block is not limited to CTU, it may also be CU, which is not limited in the embodiments of the present application. The encoder obtains the neural network based sequence-level enabled flag, that is, sps_nnlf_enable_flag. If the sequence-level enabled flag is "allowed", the neural network based in-loop filtering technology is allowed to be used; if the sequence-level enabled flag is "disallowed", the neural network based in-loop filtering technology is not allowed to be used. The sequence-level enabled flag needs to be encoded into the bitstream during encoding a video sequence.

In the embodiments of the present application, in response to that the sequence-level enabled flag specifies an allowed state, a encoding side attempts the network filtering model based in-loop filtering technology, and the encoder obtains an original value of the current block of the current frame, the reconstructed value of the current block and the first quantization parameter. In response to that the network filtering model based sequence-level enabled flag specifies a disallowed state, the encoding side does not attempt the network based in-loop filtering technology, continues to attempt other in-loop filtering tools, such as LF filtering, and outputs a complete reconstructed picture after completing filtering.

S202, at least twice filtering estimation is performed on the current block based on a network filtering model, the reconstructed value of the current block, at least one frame-level quantization offset parameter and the original quantization parameter to determine at least two first sub-rate-distortion costs of the current block, and the current frame is traversed to determine at least two first rate-distortion costs of the current frame.

S203, a first best-rate-distortion cost is determined based on the at least two first rate-distortion costs.

In the embodiments of the present application, in a case where the encoder encoding the current block of the current frame, the encoder may adjust the original quantization parameter using at least one frame-level quantization offset parameter, to obtain at least one candidate quantization parameter. Then the encoder performs at least twice filtering estimation on the current block based on the at least one candidate quantization parameter and the original quantization parameter, combining the network filtering model and the reconstructed value of the current block, respectively, to obtain corresponding at least two first sub-rate-distortion costs. The number of filtering times is consistent with the total number of at least one candidate quantization parameter and the original quantization parameter. By performing the above filtering process on each block of the current frame, at least two first sub-rate-distortion costs corresponding to each block may be obtained, the first sub-rate-distortion costs corresponding to each quantization parameter are superimposed to obtain a first rate-distortion cost of the current frame. That is, the current frame is traversed to determine the at least two first rate-distortion costs of the current frame.

In some embodiments of the present application, the encoder performs filtering estimation on the current block based on the network filtering model, the reconstructed value of the current block and the original quantization parameter to determine a first reconstructed value; performs rate-distortion cost estimation on the first reconstructed value and the original value of the current block to obtain a first sub-rate-distortion cost of the current block, and traverses the current frame to determine a first rate-distortion cost of the current frame; and performs at least once filtering estimation on the current block respectively based on the network filtering model, the at least one frame-level quantization offset parameter, the original quantization parameter and the reconstructed value of the current block in the current frame, to determine at least one first sub-rate-distortion cost of the current block, and traverses the current frame to determine at least one first rate-distortion cost of the current frame (costFrame2 and costFrame3).

In the embodiments of the present application, for the current frame, the encoder performs filtering estimation on the current block based on the network filtering model, the reconstructed value of the current block and the original quantization parameter to determine first estimation residual information; determines a first residual scaling factor; scales the first estimated residual value using the first residual scaling factor to obtain first scaled residual information; and determining the first reconstructed value by combining the first scaled residual information with the reconstructed value of the current block. It may also possible to determine the first reconstructed value by combining the first estimated residual information with the reconstructed value of the current block without scaling.

In some embodiments of the present application, before determining the first residual scaling factor, for the current frame, the encoder obtains the reconstructed value of the current block and at least one of a prediction value of the current block, block partitioning information of the current block or a deblocking filtering boundary strength of the current block; and performs filtering estimation on the reconstructed value of the current block using the network filtering model and in combination with a frame-level quantization parameter and the at least one of the prediction value of the current block, the block partitioning information of the current block or the deblocking filtering boundary strength of the current block, to obtain first residual information of the current block, and encodes the first residual scaling factor into a bitstream.

It should be noted that the encoder performs filtering operation based on an original quantization parameter without adjustment to obtain the first reconstructed value; then the encoder performs rate-distortion cost estimation on the first reconstructed value and the original value of the current block to obtain a first sub-rate-distortion cost (costCTU1) of the current block, and traverses all blocks of the current frame to determine a first rate-distortion cost (i.e., costFrame1) of the current frame; finally, the encoder attempts to perform at least one filtering estimation by changing an input parameter (e.g., quantization parameter) inputted to the network filtering model at least once, to obtain the at least one first rate-distortion cost of the current frame. Specifically, the encoder adjusts the original quantization parameter based on the at least one frame-level quantization offset parameter to obtain the at least one candidate quantization parameter. For each candidate quantization parameter, the encoder filtering the reconstructed value of the current block once, to determine another first sub-rate-distortion cost (costCTU2 or costCTU3) of the current block, and traverses all blocks of the current frame to determine the first rate-distortion cost (costFrame2 or costFrame3) of the current frame.

In the embodiments of the present application, after obtaining the first reconstructed value of the current block, the encoder performs rate-distortion cost estimation on the first reconstructed value and the original value of the current block to obtain the first sub-rate-distortion cost of the current block, and continues to encode the next block until first sub-rate-distortion costs of all blocks of the current frame are obtained, then sums up the first sub-rate-distortion costs of all blocks to obtain the first rate-distortion cost of the current frame.

In some embodiments of the present application, the process of performing, by the encoder, at least once filtering estimation on the current block respectively based on the network filtering model, the at least one frame-level quantization offset parameter, the original quantization parameter and the reconstructed value of the current block of the current frame, to determine the at least one first sub-rate-distortion cost of the current block, includes:
obtaining an i-th frame-level quantization offset parameter, and adjusting the original quantization parameter based on the i-th frame-level quantization offset parameter to obtain an i-th adjusted frame-level quantization parameter, where i is a positive integer greater than or equal to 1;
performing filtering estimation on the current block based on the network filtering model, the reconstructed value of the current block and the i-th adjusted frame-level quantization parameter to obtain an i-th third reconstructed value; and
performing rate-distortion cost estimation on the i-th third reconstructed value and the original value of the current block, traversing all blocks of the current frame to obtain an i-th first sub-rate-distortion cost; and continuing to perform an (i+1)-th filtering estimation based on an (i+1)-th frame-level quantization offset parameter until the filtering estimation is completed at least once to obtain at least one third reconstructed value, so as to determine the at least one first sub-rate-distortion cost (costCTU2 and costCTU3) of the current block.

In the embodiments of the present application, the encoder performs the rate-distortion cost estimation on the i-th third reconstructed value and the original value of the current block, adds rate-distortion costs of all blocks to obtain the i-th first sub-rate-distortion cost after traversing all blocks of the current frame, and continues to perform the (i+1)-th filtering estimation based on the (i+1)-th frame-level quantization offset parameter until filtering estimation of all blocks is completed, so as to obtain one rate-distortion cost of the current frame, and until at least one round of filtering is completed, the at least one first sub-rate-distortion cost of the current block is obtained.

In the embodiments of the present application, the encoder performs the at least once filtering estimation on the current block respectively based on the network filtering model, the reconstructed value of the current block and the i-th adjusted frame-level quantization parameter to obtain an i-th second estimation residual information; determines an i-th second residual scaling factor respectively corresponding to the i-th adjusted frame-level quantization parameter; scaling the i-th second estimated residual information using the i-th second residual scaling factor, to obtain i-th second scaled residual information; and determines the i-th third reconstructed value by combining the i-th second scaled residual information with the reconstructed value of the current block correspondingly.

In some embodiments of the present application, the encoder may further obtain the reconstructed value of the current block and the at least one of a prediction value of the current block, the block partitioning information of the current block or the deblocking filtering boundary strength of the current block; and performs filtering estimation on the the reconstructed value of the current block using the network filtering model and in combination with the i-th adjusted frame-level quantization parameter and the at least one of the prediction value of the current block, the block partitioning information of the current block or the deblocking filtering boundary strength of the current block, to obtain the i-th second estimated residual information of the current block.

In some embodiments of the present application, the encoder may select whether to adjust the original quantization parameter of the current frame according to different frame types of encoding. For a first type frame, the original quantization parameter needs to be adjusted, but for a second type frame, the original quantization parameter does not need to be adjusted, where the second type frame is a type frame other than the first type frame. Then, during encoding, in a case where the current frame is the first type frame, the encoder may adjust the original quantization parameter to perform filtering estimation.

In some embodiments of the present application, in a case where the current frame is the first type frame, at least once filtering estimation is performed on the reconstructed value of the current block of the current frame based on the network filtering model, the at least one frame-level quantization offset parameter and the original quantization parameter, to determine the at least one first rate-distortion cost of the current frame.

It should be noted that, in the embodiments of the present application, the first type frame may be a B frame or a P frame, which is not limited in the embodiments of the present application.

Exemplarily, the encoder may adjust BaseQP and SliceQP that are used as inputs, to cause the encoding side has more options to attempt, thereby improving encoding efficiency.

The above adjustment of the BaseQP and the SliceQP includes unified adjustment of all coding tree units in a frame, and also includes separate adjustment of the coding tree units or coding units. For unified adjustment of all coding tree units in the frame, that is, adjustment may be made regardless of whether the current frame is an I frame or a B frame, and adjustment ranges of all coding tree units in the current frame are the same, that is, the quantization parameter inputs of all coding tree units are the same. For separate adjustment of the coding tree units, that is, adjustment may also be made regardless of whether the current frame is the I frame or the B frame, and adjustment ranges of all coding tree units in the current frame may be selected according to rate-distortion optimization at the encoding side of the current coding tree unit, and the adjustments between different coding tree units may be different, that is, the quantization parameter inputs of different coding tree units may be different.

It should be understood that the encoder may determine whether the block-level quantization parameter inputted to the neural network filtering model need to be adjusted based on the block-level quantization parameter adjustment flag, so that flexible selection and diverse change handling of the block-level quantization parameter may be achieved, thereby improving encoding efficiency.

In some embodiments of the present application, after obtaining the first rate-distortion cost determined based on filtering of the original quantization parameter and the at least one first rate-distortion cost determined based on filtering of the adjusted original quantization parameter, the encoder may determine a first best-rate-distortion cost (i.e., costFrameBest) with a minimum rate-distortion cost.

In some embodiments of the present application, the encoder obtains the first best-rate-distortion cost with the minimum rate-distortion cost from the at least two first rate-distortion costs, and the encoder may obtain a frame-level quantization parameter offset index corresponding to the first best-rate-distortion cost, where the frame-level quantization parameter offset index is determined based on the at least one frame-level quantization offset parameter and the original quantization parameter.

It should be noted that the first rate-distortion cost is a corresponding rate-distortion cost after the filtering operation. In the embodiments of the present application, there are two cases, one is filtering based on the original quantization parameter, and another is filtering after adjusting the original quantization parameter. The encoder may determine whether it is necessary to adjust the frame-level quantization parameter during filtering based on the first rate-distortion cost (corresponding to the original quantization parameter) and the at least one first rate-distortion cost (at least one candidate quantization parameter, i.e., the adjusted original quantization parameter).

In the embodiments of the present application, if the original quantization parameter correspondsto the minimum first rate-distortion cost, the original quantization parameter is encoded into the bitstream. If a certain adjusted original quantization parameter corresponds to the minimum first rate-distortion cost, an index of the frame-level quantization offset parameter corresponding to the adjusted original quantization parameter is used as a frame-level quantization parameter offset index corresponding to the first best-rate-distortion cost.

S204, a block-level usage flag and a first sub-best-rate-distortion cost of the current block is determined based on the at least two first sub-rate-distortion costs, and the current frame is traversed to determine a second best-rate-distortion cost of the current frame.

S205, a frame-level control flag is determined based on the first best-rate-distortion cost and the second best-rate-distortion cost.

After determining the at least two first sub-rate-distortion costs of the current block, the encoder may determine the block-level usage flag and the first sub-best-rate-distortion cost (costCTUBest) of the current block according to the at least two first sub-rate-distortion costs, traverse all blocks of the current frame, and superimposes the first sub-best-rate-distortion cost corresponding to each block of the current frame, to obtain the second best-rate-distortion cost (i.e., costBest) of the current frame.

In some embodiments of the present application, the encoder determines a first sub-best-rate-distortion cost with a minimum rate-distortion cost from the third sub-rate-distortion cost of the current block and the at least two first sub-rate-distortion costs; and if the first sub-best-rate-distortion cost is the third sub-rate-distortion cost, the encoder determines that the block-level usage flag is "unused"; or if the first sub-best-rate-distortion cost is any one of the at least two first sub-rate-distortion costs, the encoder determines that the block-level usage flag is "used".

It should be noted that, if the first sub-best-rate-distortion cost is any one of the at least two first sub-rate-distortion costs, the encoder needs to obtain the block-level quantization parameter offset index of the current block for subsequent decoding.

In some embodiments of the present application, among the at least two first sub-rate-distortion costs, if the first sub-best-rate-distortion cost is a first sub-rate-distortion cost corresponding to a candidate quantization parameter obtained by adjusting the original quantization parameter, a block-level quantization parameter offset index corresponding to the first sub-best-rate-distortion cost is obtained. The block-level quantization parameter offset index is determined based on the at least one frame-level quantization offset parameter and the original quantization parameter. That is, the block-level quantization parameter offset index is a quantization parameter offset index corresponding to a candidate quantization parameter.

It should be noted that, in the embodiments of the present application, in a process of encoding the current frame, the encoder encodes for different video components. Such as, a video component is a color component. The color component may include a luma component and a chroma component.

In the embodiments of the present application, for different color components, the encoder may obtain the first sub-best-rate-distortion cost and the third sub-rate-distortion cost (costCTUorg) of the current block under different color components based on the aforementioned principle. For the luma component, if the third sub-rate-distortion cost is minimum between the first sub-best-rate-distortion cost and the third sub-rate-distortion cost, the block-level usage flag (ctb_nnlf_luma_flag) corresponding to the current block under the luma component is a second value. If the first sub-best-rate-distortion cost is minimum between the first sub-best-rate-distortion cost and the third sub-rate-distortion cost, the block-level usage flag (ctb_nnlf_luma_flag) corresponding to the current block under the luma component is a first value, and the block-level quantization parameter offset index corresponding to the first sub-best-rate-distortion cost is recorded.

In the embodiments of the present application, for the chroma component, in a case where the block-level usage flag corresponding to the current block under the luma component is the first value, if under a candidate quantization parameter corresponding to the first sub-best-rate-distortion cost of the luma component, a first sub-rate-distortion cost of the chroma component is less than a third sub-rate-distortion cost corresponding to the chroma component, a block-level usage flag (ctb_nnlf_chroma_flag) corresponding to the current block under the chroma component is the first value. Otherwise, if under the candidate quantization parameter corresponding to the first sub-best-rate-distortion cost of the luma component, the first sub-rate-distortion cost of the chroma component is greater than or equal to the third sub-rate-distortion cost corresponding to the chroma component, the block-level usage flag (ctb_nnlf_chroma_flag) corresponding to the current block under the chroma component is the second value.

In the embodiments of the present application, the encoder determines the frame-level control flag based on the first best-rate-distortion cost and the second best-rate-distortion cost, and encodes the frame-level control flag into the bitstream.

In some embodiments of the present application, the encoder may further perform rate-distortion cost estimation based on the original value of the current block and the reconstructed value of the current block of the current frame to determine a third sub-rate-distortion cost (costCTUorg) of the current block, and continue to encode a next block until third sub-rate-distortion costs of all blocks of the current frame is obtained, then sums up the third sub-rate-distortion costs of all blocks to obtain a fourth rate-distortion cost (costOrg).

In the embodiments of the present application, after obtaining the first best-rate-distortion cost, the second best-rate-distortion cost and the fourth rate-distortion cost, the encoder determines a first minimum-rate-distortion cost with the minimum rate-distortion cost from the first best-rate-distortion cost, the second best-rate-distortion cost and the fourth rate-distortion cost.

If the first minimum-rate-distortion cost is the fourth rate-distortion cost, the encoder determines that the frame-level control flag is "disabled".

If the first minimum-rate-distortion cost is the first best-rate-distortion cost, the encoder determines that the frame-level control flag is "enabled". The encoder encodes the frame-level control flag and the frame-level quantization parameter offset index (corresponding to the frame-level quantization offset parameter) into the bitstream.

If the first minimum-rate-distortion cost is the second best-rate-distortion cost, he encoder determines that the frame-level control flag is "disabled".

In some embodiments of the present application, if the first minimum-rate-distortion cost is the second best-rate-distortion cost, the encoder determines that the frame-level control flag is "disabled" and determines that the frame-level usage flag is "enabled", and the encoder encodes the frame-level usage flag, the frame-level control flag, the block-level quantization parameter offset index and the block usage flag into the bitstream.

In some embodiments of the present application, the encoder may further encode a frame-level quantization offset parameter corresponding to the first best-rate-distortion cost in the at least one frame-level quantization offset parameter into the bitstream, or encode a frame-level quantization parameter offset index (sequence number of the offset) of the frame-level quantization offset parameter corresponding to the first best-rate-distortion cost in the at least one frame-level quantization offset parameter into the bitstream, which is not limited in the embodiments of the present application.

In some embodiments of the present application, after determining the frame-level control flag based on the first best-rate-distortion cost and the second best-rate-distortion cost, if the first minimum-rate-distortion cost is the first best-rate-distortion cost, a second residual scaling factor corresponding to the first minimum-rate-distortion cost is encoded into the bitstream.

It should be noted that, in the embodiments of the present application, different frame-level rate-distortion costs are obtained by using the above encoding estimation for each color component. That is, under each color component, the first best-rate-distortion cost, the second best-rate-distortion cost and the fourth rate-distortion cost may be all obtained.

In the embodiments of the present application, after traversing each color component, if a value of the fourth rate-distortion cost (costOrg) is minimum, the frame-level control flag corresponding to the color component is set to the second value and encoded into the bitstream; if a value of the first best-rate-distortion cost (costFrameBest) is minimum, the frame-level control flag (ph_nnlf_luma_ctrl_flag/ ph _nnlf_chroma_ctrl_flag) corresponding to the color component is set to the first value, and it is encoded into the bitstream together with a decided frame-level quantization parameter offset index; if a value of the second best-rate-distortion cost (costBest) is minimum, the frame-level usage flag corresponding to the color component is set to the first value, the frame-level control flag corresponding to the color component is set to the second value, and they are encoded into the bitstream together with the block-level usage flag and the block-level quantization parameter offset index (i.e., BaseQP index) of each block.

It should be understood that the encoder may determine the frame-level control flag, the frame-level usage flag, the block-level usage flag and the block-level quantization parameter offset index based on a fourth rate-distortion cost without filtering, a first best-rate-distortion cost based on filtering (which is based on the original quantization parameter and the candidate quantization parameter) and the second best-rate-distortion cost obtained by superimposing the block-level minimum-rate-distortion cost, and determine whether the quantization parameter inputted into the network filtering model needs to be adjusted, so that flexible selection and diverse change handling of the frame-level quantization parameter may be achieved, thereby improving encoding efficiency.

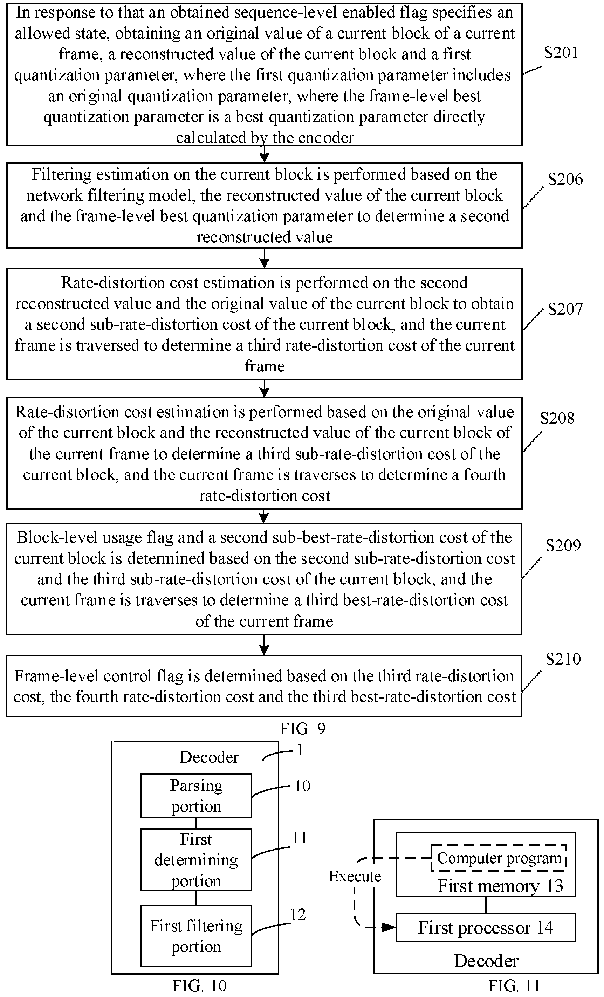

The present application embodiments provide a filtering method, which is applied to an encoder. As shown in FIG. 9, the method may include:
S201, in response to that an obtained sequence-level enabled flag specifies an allowed state, obtaining an original value of a current block of a current frame, a reconstructed value of the current block and a first quantization parameter, where the first quantization parameter includes: an original quantization parameter, where the frame-level best quantization parameter is a best quantization parameter directly calculated by the encoder.

In the embodiments of the present application, except that the encoder obtains the first quantization parameter differently from the aforementioned S201, other steps are the same.

It should be noted that, in response to that the obtained sequence-level enabled flag specifies the allowed state, the encoder may obtain the frame-level best quantization parameter, and the frame-level best quantization parameter is the best quantization parameter directly calculated by the encoder. Specifically, in response to that the obtained sequence-level enabled flag specifies the allowed state, the encoder obtains the original value of the current block of the current frame and the reconstructed value of the current block, and directly calculates a frame-level best quantization parameter of the current frame.

S206, filtering estimation on the current block is performed based on the network filtering model, the reconstructed value of the current block and the frame-level best quantization parameter to determine a second reconstructed value.

S207, rate-distortion cost estimation is performed on the second reconstructed value and the original value of the current block to obtain a second sub-rate-distortion cost of the current block, and the current frame is traversed to determine a third rate-distortion cost of the current frame (costFrame of second round).

S208, rate-distortion cost estimation is performed based on the original value of the current block and the reconstructed value of the current block of the current frame to determine a third sub-rate-distortion cost of the current block, and the current frame is traverses to determine a fourth rate-distortion cost.

S209, the block-level usage flag and a second sub-best-rate-distortion cost of the current block is determined based on the second sub-rate-distortion cost and the third sub-rate-distortion cost of the current block, and the current frame is traverses to determine a third best-rate-distortion cost of the current frame (costBest of third round).

In the embodiments of the present application, the encoder further determines an optimal filtering manner based on comparison of several cases including no filtering, filtering using a frame-level best quantization parameter, and block-level rate-distortion cost.

In the embodiments of the present application, the encoder may perform filtering estimation on the current block based on the network filtering model, the reconstructed value of the current block and the frame-level best quantization parameter to determine the second reconstructed value. The encoder inputs the frame-level best quantization parameter to the network filtering model, to filter the reconstructed value of the current block, and obtains the second reconstructed value.

In the embodiments of the present application, a case of filtering is that: the encoder performs rate-distortion cost estimation on the second reconstructed value and the original value of the current block to obtain the second sub-rate-distortion cost (costCTUnn) of the current block, and traverses each block of the current frame to determine the third rate-distortion cost (costFrame) of the current frame. In the embodiments of the present application, after obtaining the second reconstructed value of the current block, the encoder performs rate-distortion cost estimation on the second reconstructed value and the original value of the current block, to obtain the rate-distortion cost of the current block, continues to encode the next block until the rate-distortion costs of all blocks of the current frame are obtained, and sums up the rate-distortion costs of all blocks to obtain the third rate-distortion cost of the current frame.

Exemplarily, the encoder attempts to, based on a neural network based in-loop filtering technology, input a reconstructed sample YUV of the current block, a predicted sample YUV of the current block, a YUV with partitioning information of the current block, and frame-level best quantization parameters (BaseQP and SliceQP) of the current block to the network filtering model for inference. After the network filtering model outputs estimated residual information after filtering of the current block, the encoder scales the estimated residual information, where a scaling factor of the scaling operation is calculated based on an original picture sample of the current frame, a reconstructed sample that has not been filtered by the neural network in-loop filtering, and a reconstructed sample that has been filtered by the neural network in-loop filtering. Scaling factors of different color components are different, and if needed, they will be encoded into the bitstream for transferring to the decoding side. The encoder superimposes scaled residual information on the reconstructed sample that has not been filtered by the neural network in-loop filtering for outputting. The encoder calculates a value of a rate-distortion cost based on the current block after the neural network based in-loop filtering and the original picture sample of the current block, and traverses each block to obtain the third rate-distortion cost of the current frame, which is denoted as costFrame.

In the embodiments of the present application, a case of no filtering is that: the encoder performs rate-distortion cost estimation based on the original value of the current block and the reconstructed value of the current block of the current frame to determine the third sub-rate-distortion cost (costCTUorg) of the current block, and traverses each block of the current frame to determine the fourth rate-distortion cost (costOrg). The obtaining method of the fourth rate-distortion cost is consistent with that in the aforementioned embodiments, which will not be repeated in the embodiments of the present application.

It should be noted that the obtaining methods of the rate-distortion cost in a case of filtering and no filtering is consistent with the principle of the aforementioned embodiments, which will not be repeated here.

In some embodiments of the present application, the encoder further needs to determine the block-level usage flag and the second sub-best-rate-distortion cost of the current block based on the second sub-rate-distortion cost and the third sub-rate-distortion cost of the current block (costCTUBest), and traverse each block of the current frame to determine the third best-rate-distortion cost (costBest) of the current frame.

In some embodiments of the present application, the implementation of determining, by the encoder, the block-level usage flag and the second sub-best-rate-distortion cost of the current block based on the second sub-rate-distortion cost and the third sub-rate-distortion cost of the current block is that: if the third sub-rate-distortion cost is less than the second sub-rate-distortion cost, the encoder determines that the block-level usage flag is "unused" and the second sub-best-rate-distortion cost is the third sub-rate-distortion cost; if the third sub-rate-distortion cost is greater than or equal to the second sub-rate-distortion cost, the encoder determines that the block-level usage flag is "used" and the second sub-best-rate-distortion cost is the second sub-rate-distortion cost.

In the embodiments of the present application, different video components, such as color components, may correspond to their respective frame-level control flags, frame-level usage flags, block-level usage flags, or the like. The above encoding estimation is used for each color component to obtain different frame-level rate-distortion costs. That is, under each color component, the second sub-rate-distortion cost of the current block and the third sub-rate-distortion cost of the current block may be all obtained.

In the embodiments of the present application, for different color components, the encoder may obtain a second sub-rate-distortion cost and a third sub-rate-distortion cost under each color component based on the aforementioned principle. For a luma component, if the third sub-rate-distortion cost is the minimum between the third sub-rate-distortion cost and the second sub-rate-distortion cost, a block-level usage flag (ctb_nnlf_luma _flag) corresponding to the current block under the luma component is a second value. If the second sub-rate-distortion cost is the minimum between the second sub-rate-distortion cost and the third sub-rate-distortion cost, the block-level usage flag (ctb_nnlf_luma_flag) corresponding to the current block under the luma component is a first value.

In the embodiments of the present application, for a chroma component, if a second sub-rate-distortion cost of the chroma component is less than a third sub-rate-distortion cost corresponding to the chroma component, the block-level usage flag (ctb_nnlf_chroma_flag) corresponding to the current block under the chroma component is the first value. Otherwise, if the second sub-rate-distortion cost of the chroma component is greater than or equal to the third sub-rate-distortion cost corresponding to the chroma component, the block-level usage flag (ctb_nnlf_chroma_flag) corresponding to the current block under the chroma component is the second value.

It should be noted that, under each color component, the second sub-best-rate-distortion cost of each block is superimposed to obtain a third best-rate-distortion cost of the current frame under each color component.

S210, a frame-level control flag is determined based on the third rate-distortion cost, the fourth rate-distortion cost and the third best-rate-distortion cost.

In the embodiments of the present application, the encoder determines the minimum-rate-distortion cost based on the third rate-distortion cost, the fourth rate-distortion cost and the third best-rate-distortion cost, so as to determine the frame-level control flag.

In some embodiments of the present application, the implementation of determining, by the encoder, the frame-level control flag based on the third rate-distortion cost, the fourth rate-distortion cost and the third best-rate-distortion cost is:
determining a third minimum-rate-distortion cost from the third rate-distortion cost, the fourth rate-distortion cost and the third best-rate-distortion cost; and
if the third minimum-rate-distortion cost is the fourth rate-distortion cost, determining that the frame-level control flag is "disabled";
if the third minimum-rate-distortion cost is the third rate-distortion cost, determining that the frame-level control flag is "enabled", and encoding the frame-level control flag and fream-level best quantization parameter into the bitstream; or
if the third minimum-rate-distortion cost is the third best-rate-distortion cost, determining that the frame-level control flag is "disabled".

In some embodiments of the present application, if the third minimum-rate-distortion cost is the third best-rate-distortion cost, it is determined that the frame-level control flag is "disabled" and the frame-level usage flag is "enabled", and the frame-level usage flag, the frame-level control flag, the frame-level best quantization parameter, and the block-level usage flag are encoded into the bitstream.

In the embodiments of the present application, different video components, such as color components, may correspond to their respective frame-level control flags, frame-level usage flags, block-level usage flags, or the like. The above encoding estimation is used for each color component obtains different frame-level rate-distortion costs. That is, under each color component, the third rate-distortion cost, the fourth rate-distortion cost and the third best-rate-distortion cost may be all obtained.

Each color component is traversed, if a value of the fourth rate-distortion cost (costOrg) is minimum, the frame-level control flag corresponding to the color component is set to the second value and encoded into the bitstream; if a value of the third rate-distortion cost (costFrame) is minimum, the frame-level control flag (ph_nnlf_luma_ctrl_flag/ ph_nnif_chroma_ctrl_flag) corresponding to the color component is set to the first value, and it is encoded into the bitstream together with a decided frame-level quantization parameter offset index; if a value of the third rate-distortion cost (costBest) is minimum, the frame-level usage flag corresponding to the color component is set to the first value, the frame-level control flag corresponding to the color component is set to the second value, and they are encoded into the bitstream together with the block-level usage flag of each block and the frame-level quantization parameter offset index, (i.e., BaseQP index).

It should be understood that the encoder may determine quantization parameters inputted to the neural network filtering model based on the frame-level best quantization parameters, and the frame-level best quantization parameters are all adjusted parameter, which are different from the original quantization parameter. In this way, flexible selection and diverse change handling of the frame-level quantization parameter may be achieved, thereby improving decoding efficiency.

In some embodiments of the present application, the input parameters inputted to the network filtering model may include the reconstructed value of the current block, the original quantization parameter and at least one of the prediction value of the current block, block partitioning information of the current block or a deblocking filtering boundary strength of the current block, and may further include other information, which is not limited in the embodiments of the present application. The encoder may adjust any one of the original quantization parameter, the prediction value of the current block, the block partitioning information of the current block, and the deblocking filtering boundary strength of the current block for performing filtering estimation, which is not limited in the embodiments of the present application.

In some embodiments of the present application, in response to that the sequence-level enabled flag specifies an allowed state, the encoder obtains the reconstructed value of the current block, the first quantization parameter and at least one of a prediction value of the current block, block partitioning information of the current block or a deblocking filtering boundary strength of the current block; performs filtering estimation on the current block based on the network filtering model, the reconstructed value of the current block, the first quantization parameter and the at least one of the prediction value of the current block, the block partitioning information of the current block or the deblocking filtering boundary strength of the current block, to determine a fourth reconstructed value; performs rate-distortion cost estimation on the fourth reconstructed value and the original value of the current block to obtain a fourth sub-rate-distortion cost of the current block, and traverses the current frame to determine a fifth rate-distortion cost of the current frame; performs at least once filtering estimation on the current block based on the network filtering model, at least one frame-level input offset parameter, the reconstructed value of the current block of the current frame, and at least one of the prediction value of the current block, the block partitioning information of the current block or the deblocking filtering boundary strength of the current block, to determine at least one sixth rate-distortion cost of the current frame; and determines the frame-level control flag based on the fifth rate-distortion cost and the at least one sixth rate-distortion cost.

It should be noted that the input parameter inputted to the network filtering model may be determined according to the actual condition, which is not limited in the embodiments of the present application.

It should be noted that the encoder transfers the frame-level start flag, the frame-level usage flag, the block-level usage flag, the sequence-level enabled flag, the frame-level quantization parameter offset index and the block-level quantization parameter offset index in the bitstream in a form of syntax element flag information. The specific representation manner of the syntax element flag information has been explained in the embodiments of the decoding side, which will not be repeated here.

It should be understood that the encoder may estimate whether the input parameter inputted to the input network filtering model need to be adjusted, to determine an adjustment manner with the best encoding effect, so that flexible selection and diverse change handling of the frame-level quantization parameter may be achieved, thereby improving encoding efficiency.

The embodiments of the present application provide a bitstream.

In another embodiment of the present application, based on the decoding method and the encoding method described in the aforementioned embodiments, the embodiments of the present application propose a method for adjusting the BaseQP which is as an input, to cause the encoding side has more options to attempt, thereby improving the encoding efficiency. The main idea is to provide the encoding side with multiple options, and use the coding tree unit level or the coding unit level as the basic unit to determine the adjustment range.

The encoder provides multiple BaseQPs as candidates or provides multiple offset values superimposed on the BaseQPs as candidates. Before each candidate is inputted to the neural network, the coding tree unit or the coding unit reasoning calculates a reconstructed sample block after filtering, and obtains a corresponding rate-distortion cost value. A reconstructed sample block corresponding to a candidate with the minimum cost is selected as an output sample of the current filtering technology, and a BaseQP or an offset value corresponding to the candidate with the minimum cost is recorded and encoded into the bitstream through an index or a direct binarization method for transferring to the decoding side. The decoding side parses the neural network based in-loop filtering usage flag of the current coding tree unit or the current coding unit, parses and calculates the BaseQP or the offset value mentioned above. If the neural network based in-loop filtering filtering is used, the final BaseQP is determined as a BaseQP of the current coding tree unit or the current coding unit and inputted to the neural network model, and a reconstructed sample outputted from the neural network model are obtained as an output sample of the current filtering manner.

In a specific embodiment, for the encoding side, the specific process is as follows:
the encoder traverses intra prediction or inter prediction to obtain a prediction block of each coding unit, and obtains residual of a coding unit by making a difference between the original picture block and the prediction block. The encoder obtains a frequency domain residual coefficient by processing the residual via various transformation modes, then obtains distortion residual information by performing quantization, inverse quantization and inverse transformation on the frequency domain residual coefficient, and superimposes the distortion residual information with the prediction block to obtain a reconstructed block of the current block. After a picture has been encoded, an in-loop filtering module filters the picture using a coding tree unit level as a basic unit, and a technical solution of the embodiments of the present application is applied here. An enabled flag of the neural network based in-loop filtering, i.e., sps_nnlf_enable_flag, is obtained. If the flag is true, the neural network based in-loop filtering technology is allowed to be applied; if the flag is false (negative), the neural network based in-loop filtering technology is not allowed to be applied. The sequence-level enabled flag may be encoded into the bitstream during encoding a video sequence.

Step 1, if the enabled flag of the neural network based in-loop filtering is true, the encoder attempts the neural network based in-loop filtering technology, i.e., executes step 2; if the enabled flag of the neural network based in-loop filtering is false, the encoder does not attempt the neural network based in-loop filtering filtering, i.e., skips step 2 and directly executes step 3.

Step 2, the neural network based in-loop filtering technology is initialized and loaded in a neural network model applicable to the current frame.

Round 1:
the encoder calculates cost information without the neural network based in-loop filtering technology, that is, the rate-distortion cost value (denoted as costOrg) is calculated using a reconstructed sample of the coding tree unit prepared as the input of the neural network model and an original picture sample of the coding tree unit.

Round 2:
the encoding side attempts the neural network based in-loop filtering technology, and inputs the reconstructed sample YUV of the current coding tree and the quantization parameter BaseQP of the current coding tree unit to a loaded network model for inference. The neural network in-loop filtering filtering outputs the reconstructed sample block of the current coding tree unit. The rate-distortion cost value is calculated based on the coding tree unit sample after the neural network based in-loop filtering and the original picture sample of the coding tree unit, which is denoted as costFrame1. The encoder continues to attempt other BaseQP candidates or use offset value compensation as an inputted BaseQP. In the embodiments, taking two candidates as an example, rate-distortion cost values of the two BaseQPs are calculated respectively and denoted as costFrame2 and costFrame3. A BaseQP with the minimum cost is outputted as the best for this round and recorded its index information, which is denoted as costFrameBest.

Round 3:
the encoding side attempts an optimization selection of the coding tree unit level. The attempt of the neural network model based in-loop filtering of the encoding side in the second round directly default that the technology is used for all coding tree units of the current frame. The luma component and the chroma component are controlled separately using a frame-level control flag, while the coding tree unit level does not need to transfer the usage flag. In this round, the combination of coding tree unit level flags is attempted, and each color component may be controlled separately. The encoder traverses coding tree units, calculates the rate-distortion cost of the reconstructed sample without the neural network model based in-loop filtering and the original sample of the current coding tree unit, which is denoted as costCTUorg, and calculates the rate-distortion cost of the reconstructed sample of the neural network based in-loop filtering of each BaseQP and the original sample of the current coding tree unit, which are denoted as costCTU1, costCTU2 and costCTU3 respectively.

For the luma component, if the costCTUorg of the current luma component is less than costCTU of any luma component, the coding tree unit level usage flag (ctb_nnlf_luma _flag) of the neural network model based in-loop filtering of the luma component is set to false; otherwise, the ctb_nnlf_luma_flag is set to true, and the BaseQP parameter offset index corresponding to the minimum cost among costCTU1, costCTU2 or costCTU3 on the luma component is recorded.

For the chroma component, if ctb_nnlf luma flag is true, whether the costCTU of the chroma component corresponding to the BaseQP with the minimum cost of the current luma component is less than costCTUorg is determined. If yse, the coding tree unit-level usage flag (ctb_nnlf chroma flag) of the neural network based in-loop filtering of the chroma component is set to true; if not, the ctb_nnlf_chromaflag is set to false. If the ctb_nnlf_luma_flag is false, the process of implementation is the same as that of the luma component.

If all coding tree units of the current frame have been traversed, in this case, the rate-distortion cost value (costBest) of the reconstructed sample of the current frame and the original picture sample is calculated.

After traversing each color component, if a value of the costOrg (in the first round) is the minimum, a frame-level control flag of the neural network based in-loop filtering corresponding to the color component is set to false and encoded into the bitstream; if a value of costFrameBest (in the second round) is the minimum, the frame-level control flag of neural network based in-loop filtering corresponding to the color component (ph_nnlf_luma_ctrl_flag/ ph_nnlf_chroma_ctrl_flag) is set to true, and it is encoded into the bitstream together with a frame-level quantization parameter adjustment index decided in the second round; if a value of costBest (in the third round) is the minimum, the frame-level usage flag of neural network based in-loop filtering corresponding to the color component is set to true, the frame-level control flag is set to false, and they are encoded into the bitstream together with the coding tree unit-level usage flag and BaseQP index decided in the third round.

Step 3, the encoder continues to attempt other in-loop filtering tools and outputs a complete reconstructed picture after completing filtering. The specific process is not related to the technical solution of the embodiments of the present application, which is not described in detail here.

In another specific embodiment, for the decoding side, the specific process is as follows:
the decoding side parses a sequence-level flag, if sps_nnlf_enable _flag is true, it means that the current bitstream allows to use the neural network model based in-loop filtering technology, and relevant syntax elements need to be parsed in the subsequent decoding process; otherwise, it means that the current bitstream does not allow to use the neural network model based in-loop filtering technology, the relevant syntax elements do not need to be parsed in the subsequent decoding process, and the relevant syntax elements is an initial value or a false state by default.

Step 1, the decoder parses syntax elements of the current frame, to obtain the frame-level control flags and the frame-level usage flags based on the neural network model, and if the frame-level control flags are not all false, step 2 is executed, otherwise, step 2 is skipped and step 3 is executed.

Step 2, ph_nnlf_luma_enable_flag/ph_nnlf_chroma_enable_flag is parsed or directly assigned according to the status of which ph_nnlf_luma_ctrl_flag/ph_nnlf_chromactrl_flag obtained by parsing is true or false.

If the frame-level control flag (ph_nnlf_luma_ctrl_flag/ph_nnlf_chromactrl_flag) is true, it means that the neural network based in-loop filtering technology is applied to all coding tree units under the current color component, that is, the coding tree unit-level usage flag of all coding tree units of the current frame under the color component is set to true automatically;
otherwise, it means that the neural network based in-loop filtering technology is applied to some coding tree units, and the neural network based in-loop filtering technology is not applied to another coding tree units. Therefore, if the frame-level control flag is negative (false) and the frame-level usage flag is true, it is necessary to further parse the coding tree unit-level usage flag (ctb_nnlf_luma _flag/ ctb nnlf chroma flag) of all coding tree units of the current frame under the color component.

If ph_nnlf_ctrl_flag is true, usage flags of all coding tree units is set to true by default, and BaseQP adjustment index (ph_nnlf_gp_index) of the current frame is parsed, and the BaseQPFinal as the final input is calculated and applied to all coding tree units of the current frame;
otherwise, the frame-level usage flag is parsed. If the frame-level usage flag is true, the usage flag of each coding tree unit and the BaseQP adjustment index (ctb_nnlf_qp_index) is parsed and applied to the corresponding coding tree unit, to calculate the BaseQPFinal as the final input.

Before performing the neural network based in-loop filtering on the current frame, the module is initialized and the network model is loaded for subsequent speculation.

If coding tree unit-level usage flags of all color components of the current coding tree unit are not all false, the current coding tree unit is filtered by using the neural network based in-loop filtering technology. Taking the reconstructed sample YUV and the quantization parameter information of the current coding tree unit as inputs, the network model performs inference to obtain the reconstructed sample YUV of the current coding tree unit after the neural network based in-loop filtering.

According to the coding tree unit-level usage flag of each color component of the current coding tree unit, the reconstructed sample is selected as an output of the neural network based in-loop filtering technology. If the coding tree unit-level usage flag of the corresponding color component is true, the reconstructed sample after the neural network based in-loop filtering of the corresponding color component is used as the output; otherwise, the reconstructed sample without the neural network based in-loop filtering is used as the output of the color component.

After traversing all coding tree units of the current frame, the module of the neural network based in-loop filtering ends.

Step 3, the decoding side continues to traverse other in-loop filtering tools and outputs the complete reconstructed picture after completing filtering. The specific process is not related to the technical solution of the embodiments of the present application, which will not be described in detail here.

In another specific embodiment, a brief description of the parsing process at the decoding side is shown in Table 1, where bold fonts indicate syntax elements that need to be parsed.

**Table 1**

| | |
|---|---|
| if (sps_nnlf_enable_flag) | |
| { | |
| ph_nnlf_luma_ctrl_flag | ae(v) |
| ph_nnlf_chroma_ctrl_flag | ae(v) |
| if (ph_nnlf_luma_ctrl_flag ∥ ph_nnlf_chroma_ctrl_flag) | |
| { | |
| ph_nnlf_luma_enable_flag = ph_nnlf_luma_ctrl_flag | |
| ph_nnlf_luma_chroma_flag = ph_nnlf_chroma_ctrl_flag | |
| ph_nnlf_qp_index | ae(v) |
| for (traverse all ctbs) | |
| { | |
| ctb_nnlf_luma_flag = ph_nnlf_luma_ctrl_flag | |
| ctb_nnlf_chroma_flag = ph_nnlf_chroma_ctrl_flag | |
| ctb_nnlf_qp_index = ph_nnlf_qp_index | |
| } | |
| } | |
| else { | |
| ph_nnlf_luma_enable_flag | ae(v) |
| ph_nnlf_chroma_enable_flag | ae(v) |
| if (ph_nnlf_luma_enable_flag) | |
| { | |
| for (traverse all ctbs) { | |
| ctb_nnlf_luma_flag | ae(v) |
| } | |
| } | |
| if (ph_nnlf_chroma_enable_flag) | |
| { | |
| for (traverse all ctbs) { | |
| ctb_nnlf_chroma_flag | ae(v) |
| } | |
| } | |
| if (ph_nnlf_luma_enable_flag ∥ ph_nnlf_chroma_enable_flag) | |
| { | |
| for (traverse all ctbs) { | |
| ctb_nnlf_qp_index | ae(v) |
| } | |
| } | |
| } // enable | |
| } // ctrl | |
| } // sps | |

In the above syntax table, the chroma component is represented by only one chroma flag, while in some embodiments, it may also be represented by Cb and Cr respectively, which will not be repeated here.

In another embodiment of the present application, the encoding side obtains a current entire frame, and an optimal BaseQP value of an intra coding tree unit or an intra coding unit, the coding tree unit or coding unit uses the optimal BaseQP value as an input of the neural network based in-loop filtering model of acurrent basic unit. The reconstructed sample block after filtering is inference calculated by using the model and the rate-distortion cost value is obtained. If the cost value is less than the rate-distortion cost value obtained by the reconstructed sample value without the neural network in-loop filtering, the neural network based in-loop filtering technology is not applied, and the usage flag of the current frame or the coding tree unit-level usage flag is set to false; otherwise, the neural network based in-loop filtering technology is applied, and the usage flag of the current frame or the coding tree unit-level usage flag is set to true. The flag is encoded into the bitstream, and the optimal BaseQP value is encoded into the bitstream at the frame-level or the basic unit-level, so as to transfer to the decoding side, the transferring method is not repeated here. The decoding side parses the usage flag of the current frame or the coding tree unit-level usage flag of the neural network based in-loop filtering. If the flag is true, the decoding side makes further parsing, calculates the corresponding optimal BaseQP value, and inputs it to the neural network model to obtain the reconstructed sample output from the neural network model as the output sample of the current filtering technology.

In a specific embodiment, for the encoding side, the specific process is as follows:
the encoder traverses intra prediction or inter prediction to obtain a prediction block of each coding unit, and obtains residual of a coding unit by making a difference between the original picture block and the prediction block. The encoder obtains a frequency domain residual coefficient by processing the residual via various transformation modes, then obtains distortion residual information by performing quantization, inverse quantization and inverse transformation on the frequency domain residual coefficient, and superimposes the distortion residual information with the prediction block to obtain a reconstructed block of the current block. After a picture has been encoded, an in-loop filtering module filters the picture using a coding tree unit level as a basic unit, and a technical solution of the embodiments of the present application is applied here. An enabled flag (sequence-level) of the neural network based in-loop filtering, i.e., sps_nnlf_enable_flag, is obtained. If the flag is true, the neural network based in-loop filtering technology is allowed to be applied, if the flag is false, the neural network based in-loop filtering technology is not allowed to be applied. The sequence-level enabled flag may be encoded into the bitstream during encoding a video sequence.

Step 1, if the enabled flag of the neural network based in-loop filtering is true, the encoder attempts the neural network based in-loop filtering technology, i.e., executes step 2; if the enabled flag of the neural network based in-loop filtering is false, the encoder does not attempt the neural network based in-loop filtering technology, i.e., skips step 2 and directly executes step 3.

Step 2, the neural network based in-loop filtering technology is initialized and loaded in a neural network model applicable to the current frame.

Round 1:
the encoder calculates cost information without the neural network based in-loop filtering technology, that is, the rate-distortion cost value (denoted as costOrg) is calculated using the reconstructed sample of the coding tree unit prepared as the input of the neural network model and an original picture sample of the coding tree unit.

Round 2:
the encoding side attempts the neural network based in-loop filtering technology to calculate the optimal BaseQP value of the current encoding frame, and inputs the reconstructed sample YUV of the current coding tree unit and the quantization parameter BaseQP of the current coding tree unit to a loaded network model for inference. The neural network in-loop filtering model outputs the reconstructed sample block of the current coding tree unit. The rate-distortion cost value is calculated based on the coding tree unit sample after the neural network in-loop filtering and the original picture sample of the coding tree unit, which is denoted as costFrame.

Round 3:
the encoding side attempts an optimization selection of the coding tree unit level. The attempt of the neural network model based in-loop filtering of the encoding side in the second round directly default that the technology is used for all coding tree units of the current frame. The luma component and the chroma component are controlled separately using by a frame-level control flag, while the coding tree unit level does not need to transfer the usage flag. In this round, the combination of coding tree unit level flags is attempted, and each color component may be controlled separately. The encoder traverses coding tree units, calculates the rate-distortion cost of the reconstructed sample without the neural network model based in-loop filtering and the original sample of the current coding tree unit, which is denoted as costCTUorg, and calculates the rate-distortion cost of the reconstructed sample of the neural network1 based in-loop filtering and the original sample of the current coding tree unit, which is denoted as costCTUnn.

For the luma component, if the costCTUorg of the current luma component is less than costCTUnn, the coding tree unit level usage flag (ctb_nnlf_luma_flag) of the neural network based in-loop filtering of the luma component is set to false; otherwise, the ctb_nnlf_luma_flag is set to true.

For the chroma component, if the costCTUorg of the current chroma component is less than costCTUnn, the coding tree unit level usage flag (ctb_nnlf_chroma_flag) of the neural network based in-loop filtering of the chroma component is set to false; otherwise, the ctb nnlf chroma flag is set to true.

If all coding tree units of the current frame have been traversed, in this case, the rate-distortion cost value (costBest) of the reconstructed sample of the current frame and the original picture sample is calculated.

After traversing each color component, if the costOrg value is the minimum, a frame-level control flag of the neural network based in-loop filtering corresponding to the color component is set to false and encoded into the bitstream; if the costFrame value is the minimum, the frame-level control flag of the neural network based in-loop filtering corresponding to the color component (ph_nnlf_luma_ctrl_flag/ ph_nnlf_chroma_ctrl_flag) is set to true, and it is encoded into the bitstream together with the calculated BaseQP value; if the costBest value is the minimum, the frame-level control flag of the neural network based in-loop filtering corresponding to the color component is set to true, the frame-level control flag is set to false, and they are encoded into the bitstream together with the BaseQP value calculated in the second round and the coding tree unit-level usage flag decided in the third round.

Step 3, the encoder continues to attempt other in-loop filtering tools and outputs a complete reconstructed picture after completing filtering. The specific process is not related to the technical solution of the embodiments of the present application, which is not described in detail here.

In another specific embodiment, for the decoding side, the specific process is as follows:
the decoding side parses a sequence-level flag, if sps_nnlf_enable _flag is true, it means that the current bitstream allows to use the neural network model based in-loop filtering technology, and relevant syntax elements need to be parsed in the subsequent decoding process; otherwise, it means that the current bitstream does not allow to use the neural network model based in-loop filtering technology, the relevant syntax elements do not need to be parsed in the subsequent decoding process, and the relevant syntax elements is an initial value or a false state by default.

Step 1, the decoder parses syntax elements of the current frame, to obtain the frame-level control flags and the frame-level usage flags based on the neural network model, and if the frame-level control flags are not all false, step 2 is executed; otherwise, step 2 is skipped and step 3 is executed.

Step 2, if the frame-level control flag is true, it means that the neural network based in-loop filtering technology is applied to all coding tree units under the current color component, that is, the coding tree unit-level usage flag of all coding tree units of the current frame under the color component is set to true automatically; otherwise, it means that the neural network based in-loop filtering technology is applied to some coding tree units, and the neural network based in-loop filtering technology is not applied to another coding tree units. Therefore, if the frame-level control flag is negative (false), it is necessary to further parse the coding tree unit-level usage flag (ctb_nnlf_luma_flag/ctb_nnlf_chroma_flag) of all coding tree units of the current frame under the color component.

If ph_nnlf_luma_ctrl_flag or ph_nnlf_chroma_ctrl_flag is true, the BaseQP value (ph_nnlf_baseqp) of the current frame is parsed and the BaseQP which is as the input is applied to all coding tree units of the current frame. In addition, ph_nnlf_luma_enable_flag or ph_nnlf_chroma_enable_flag, and all coding tree unit-level usage flags (ctb_nnlf_luma_flag or ctb_nnlf_chroma_flag) of the current frame are set to true;
otherwise, ph_nnlf_luma_enable_flag/ ph_nnlf_chroma_enable_flag is parsed.

If ph_nnlf_luma_enable_flags/ph_nnlf_chroma_enable _flags are all false, all coding tree unit-level usage flags of the current frame are set to false;
otherwise, ph_nnlf_luma_enable_flags/ph_nnlf_chroma_enable _flags are not all false, and the BaseQP value (ph_nnlf_baseqp) of the current frame and the all coding tree unit-level usage flag of the corresponding color component are parsed.

If coding tree unit-level usage flags of all color components of the current coding tree unit are not all false, the current coding tree unit is filtered by using the neural network based in-loop filtering technology. Taking the reconstructed sample YUV and the quantization parameter information (BaseQP) of the current coding tree unit as inputs, the network model performs inference to obtain the reconstructed sample YUV of the current coding tree unit after the neural network based in-loop filtering.

According to the coding tree unit-level usage flag of each color component of the current coding tree unit, the reconstructed sample is selected as an output of the neural network based in-loop filtering technology. If the coding tree unit-level usage flag of the corresponding color component is true, the reconstructed sample after the neural network based in-loop filtering of the corresponding color component is used as the output; otherwise, the reconstructed sample without the neural network based in-loop filtering is used as the output of the color component.

After traversing all coding tree units of the current frame, the module of the neural network based in-loop filtering ends.

Step 3, the decoding side continues to traverse other in-loop filtering tools and outputs the complete reconstructed picture after completing filtering. The specific process is not related to the technical solution of the embodiments of the present application, which will not be described in detail here.

Although the residual scaling portion is not introduced in detail in the above embodiments, it does not mean that the residual scaling technology cannot be used in the embodiments of the present application. The residual scaling technology being used on the output of the neural network model, specifically, may be used to scale the residual obtained by by making a difference between the reconstructed sample output by the neural network and an original reconstructed sample, which will not be described in detail here.

It should be noted that, the neural network based in-loop filtering enhancement method may have a finer-grained adjustment for the BaseQP inputting plane. For example, the BaseQP is fixed to 22, the plane is a 128×128 block whose values are all 22. The plane of BaseQP may fine-tune the value of 22 according to texture complexity or residual situation. The specific method may be to calculate a standard deviation of the current coding tree unit and scale the BaseQP proportionally with the standard deviation of each coding unit.

In yet another embodiment of the present application, the embodiments of the present application provides a bitstream, where the bitstream is generated by bit encoding based on information to be encoded; where information to be encoded includes at least one of the following: first syntax element flag information of a current video sequence, second syntax element flag information of a current frame, third syntax element flag information of the current frame, fourth syntax element flag information of the current block, fifth syntax element flag information of the current block, sixth syntax element flag information of the current frame, a residual scaling factor, and an initial residual value of at least one partition block included in the current frame; where the current frame includes the at least one partition block, and the current block is any one of the at least one partition block.

In another embodiment of the present application, based on the same inventive concept as the above embodiments above, as shown in FIG. 10, a schematic structure diagram of a decoder 1 provided in the embodiments of the present application is illustrated. As illustrated in FIG. 10, the decoder 1 includes:
a parsing portion 10, configured to parse a bitstream to obtain a frame-level control flag that is based on a network filtering model, where the frame-level control flag is used to determine whether filtering is applied to all blocks of a current frame;
a first determining portion 11, configured to obtain a block-level usage flag in response to that the frame-level control flag specifies a disabled state and an obtained frame-level usage flag specifies that any video component of a current block is enabled; and obtain a quantization parameter in response to that the block-level usage flag specifies that any video component of the current block is used, where the quantization parameter includes: an adjusted block-level quantization parameter or a frame-level best quantization parameter; and
a first filtering portion 12, configured to filter a current block of the current frame based on the quantization parameter and the network filtering model to obtain first residual information of the current block.

In some embodiments of the present application, the first determining portion 11 is further configured to obtain a block-level quantization parameter offset index; and
obtain the adjusted block-level quantization parameter based on the block-level quantization parameter offset index.

In some embodiments of the present application, the first determining portion 11 is further configured to determine a block-level quantization offset parameter based on a block-level quantization parameter offset index obtained from the bitstream; and
determine the adjusted block-level quantization parameter according to an original quantization parameter obtained from the bitstream and the block-level quantization offset parameter.

In some embodiments of the present application, the parsing portion 10 is further configured to obtain the frame-level best quantization parameter by directly parsing from the bitstream.

In some embodiments of the present application, the first determining portion 11 is further configured to: after obtaining the frame-level control flag that is based on the network filtering model, in response to that the frame-level control flag specifies an enabled state, obtain a frame-level quantization parameter, where the frame-level quantization parameter includes: an adjusted frame-level quantization parameter or a frame-level best quantization parameter; and
the first filtering portion 12 is further configured to filter the current block of the current frame based on the frame-level quantization parameter and the network filtering model to obtain second residual information of the current block.

In some embodiments of the present application, the first determining portion 11 is further configured to determine a frame-level quantization offset parameter based on a frame-level quantization parameter offset index obtained from the bitstream; and determine the adjusted frame-level quantization parameter according to an obtained original quantization parameter and the frame-level quantization offset parameter.

In some embodiments of the present application, the first determining portion 11 is further configured to: before filtering the current block of the current frame based on the quantization parameter and the network filtering model to obtain the first residual information of the current block, or before filtering the current block of the current frame based on a frame-level quantization parameter and the network filtering model to obtain second residual information of the current block, obtain a reconstructed value of the current block.

In some embodiments of the present application, the first filtering portion 12 is further configured to filter the reconstructed value of the current block using the network filtering model and in combination with the quantization parameter to obtain the first residual information of the current block, so as to complete filtering of the current block.

In some embodiments of the present application, the first filtering portion 12 is further configured to filter the reconstructed value of the current block using the network filtering model and in combination with an adjusted frame-level quantization parameter to obtain the second residual information of the current block, so as to complete filtering of the current block.

In some embodiments of the present application, the first determining portion 11 is further configured to: before filtering the current block of the current frame based on the quantization parameter and the network filtering model to obtain the first residual information of the current block, or before filtering the current block of the current frame based on a frame-level quantization parameter and the network filtering model to obtain second residual information of the current block, obtain a reconstructed value of the current block and at least one of a prediction value of the current block, block partitioning information of the current block or a deblocking filtering boundary strength of the current block.

The first filtering portion 12 is further configured to filter the reconstructed value of the current block using the network filtering model and in combination with the quantization parameter and at least one of the prediction value of the current block, the block partitioning information of the current block or the deblocking filtering boundary strength of the current block, to obtain the first residual information of the current block, so as to complete filtering of the current block.

The first filtering portion 12 is further configured to filter the reconstructed value of the current block using the network filtering model and in combination with the frame-level quantization parameter and at least one of the prediction value of the current block, the block partitioning information of the current block or the deblocking filtering boundary strength of the current block, to obtain the second residual information of the current block, so as to complete filtering of the current block.

In some embodiments of the present application, the parsing portion 10 is further configured to: after filtering the current block of the current frame based on the quantization parameter and the network filtering model to obtain the first residual information of the current block, or filtering the current block of the current frame based on the frame-level quantization parameter and the network filtering model to obtain the second residual information of the current block, obtain a second residual scaling factor from the bitstream; and
the first determining portion 11 is further configured to scale the first residual information of the current block or the second residual information of the current block based on the second residual scaling factor to obtain first target residual information or second target residual information; determine a second target reconstructed value of the current block based on the second target residual information and the reconstructed value of the current block; or in response to that the block-level usage flag specifies a used state, determine a first target reconstructed value of the current block based on the first target residual information and the reconstructed value of the current block.

In some embodiments of the present application, the first determining portion 11 is further configured to: in response to that the block-level usage flag specifies an unused state, determine the reconstructed value of the current block as the first target reconstructed value.

In some embodiments of the present application, the first determining portion 11 is further configured to: after obtaining the frame-level control flag that is based on the network filtering model, obtain a reconstructed value of the current block and at least one of a prediction value of the current block, block partitioning information of the current block or a deblocking filtering boundary strength of the current block; in response to that the frame-level control flag specifies the disabled state and the obtained frame-level usage flag specifies that any video component of the current block is enabled, obtain the block-level usage flag; in response to that the block-level usage flag specifies that any video component of the current block is used, obtain an adjusted block-level input parameter; where the adjusted block-level input parameter includes: a parameter obtained by adjusting any one of the prediction value of the current block, the block partitioning information of the current block and the deblocking filtering boundary strength of the current block; and
the first filtering portion 12 is further configured to filter the current block of the current frame based on the adjusted block-level input parameter, an obtained original quantization parameter and the network filtering model, to obtain third residual information of the current block.

In some embodiments of the present application, the parsing portion 10 is further configured to: before obtaining the frame-level control flag that is based on the network filtering model, obtain a sequence-level enabled flag by parsing; and in response to that the sequence-level enabled flag specifies an allowed state, obtain the frame-level control flag that is based on the network filtering model by parsing.

The embodiments of the present application further provides a decoder 1, as shown in FIG.11, the decoder 1 may include:
a first memory 13, configured to store a computer program executable on a first processor 14; and
the first processor 14, configured to perform the filtering method described in the decoder when the computer program is executed.

It can be understood that the decoder may determine a quantization parameter that inputted to the neural network filtering model based on the adjusted frame-level quantization parameter or the frame-level best quantization parameter, both the frame-level quantization parameter and the frame-level best quantization parameter are adjusted parameters, which are different from the original quantization parameter. In this way, flexible selection and diverse change handling of the frame-level quantization parameter may be achieved without increasing complexity, and the adjustment range of each block may be different, thereby improving decoding efficiency.

The first processor 14 may be implemented by software, hardware, firmware or a combination thereof. A circuit, one or more application specific integrated circuits (ASICs), one or more general-purpose integrated circuits, one or more microprocessors, one or more programmable logic devices, or a combination of the circuits or devices, or other suitable circuits or devices may be used, to enable the first processor 14 to perform the corresponding steps of the filtering method on the decoding side in the above embodiments.

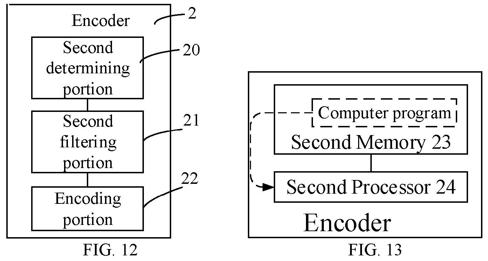

The embodiments of the present application provide an encoder 2, as shown in FIG. 12, the encoder 2 may include:
the second determining portion 20, configured to obtain an original value of a current block of a current frame, a reconstructed value of the current block and a first quantization parameter in response to that an obtained sequence-level enabled flag specifies an allowed state, where the first quantization parameter includes: an original quantization parameter;
the second filtering portion 21, configured to perform at least twice filtering estimation on the current block based on a network filtering model, the reconstructed value of the current block, at least one frame-level quantization offset parameter and the original quantization parameter to determine at least two first sub-rate-distortion costs of the current block, and traverse the current frame to determine at least two first rate-distortion costs of the current frame; and
the second determining portion 20, further configured to determine a first best-rate-distortion cost based on the at least two first rate-distortion costs; determine a block-level usage flag and a first sub-best-rate-distortion cost of the current block based on the at least two first sub-rate-distortion costs, and traverse the current frame to determine a second best-rate-distortion cost of the current frame; and determine a frame-level control flag based on the first best-rate-distortion cost and the second best-rate-distortion cost.

In some embodiments of the present application, the second filtering portion 21 is further configured to perform filtering estimation on the current block based on the network filtering model, the reconstructed value of the current block and the original quantization parameter to determine a first reconstructed value;
the second determining portion 20 is further configured to perform rate-distortion cost estimation on the first reconstructed value and the original value of the current block to obtain a first sub-rate-distortion cost of the current block, and traverse the current frame to determine a first rate-distortion cost of the current frame; and
the second filtering portion 21 is further configured to perform at least once filtering estimation on the current block respectively based on the network filtering model, the at least one frame-level quantization offset parameter, the original quantization parameter and the reconstructed value of the current block in the current frame, to determine at least one first sub-rate-distortion cost of the current block, and traverse the current frame to determine at least one first rate-distortion cost of the current frame.

In some embodiments of the present application, where the first quantization parameter includes: a frame-level best quantization parameter; where the frame-level best quantization parameter is a best quantization parameter calculated directly by the encoder;
the second filtering portion 21 is further configured to: after obtaining the original value of the current block of the current frame, the reconstructed value of the current block and the first quantization parameter, perform filtering estimation on the current block based on the network filtering model, the reconstructed value of the current block and the frame-level best quantization parameter to determine a second reconstructed value;
the second determining portion 20 is further configured to perform rate-distortion cost estimation on the second reconstructed value and the original value of the current block to obtain a second sub-rate-distortion cost of the current block, and traverse the current frame to determine a third rate-distortion cost of the current frame; perform rate-distortion cost estimation based on the original value of the current block and the reconstructed value of the current block of the current frame to determine a third sub-rate-distortion cost of the current block, and traverse the current frame to determine a fourth rate-distortion cost; determine the block-level usage flag and a second sub-best-rate-distortion cost of the current block based on the second sub-rate-distortion cost and the third sub-rate-distortion cost of the current block, and traverse the current frame to determine a third best-rate-distortion cost of the current frame; and determine the frame-level control flag based on the third rate-distortion cost, the fourth rate-distortion cost and the third best-rate-distortion cost.

In some embodiments of the present application, the second determining portion 20 is further configured to: before determining the first best-rate-distortion cost based on the at least two first rate-distortion costs, perform rate-distortion cost estimation based on the original value of the current block and the reconstructed value of the current block of the current frame to determine a third sub-rate-distortion cost of the current block, and traverse the current frame to obtain a fourth rate-distortion cost.

In some embodiments of the present application, the second determining portion 20 is further configured to determine a first sub-best-rate-distortion cost with a minimum rate-distortion cost from the third sub-rate-distortion cost of the current block and the at least two first sub-rate-distortion costs; and if the first sub-best-rate-distortion cost is the third sub-rate-distortion cost, determine that the block-level usage flag specifies an unused state; or if the first sub-best-rate-distortion cost is any one of the at least two first sub-rate-distortion costs, determine that the block-level usage flag specifies a used state.

In some embodiments of the present application, the second determining portion 20 is further configured to: after determining that the block-level usage flag specifies the used state if the first sub-best-rate-distortion cost is any one of the at least two first sub-rate-distortion costs, obtain a block-level quantization parameter offset index corresponding to the first sub-best-rate-distortion cost, where the block-level quantization parameter offset index is determined based on the at least one frame-level quantization offset parameter and the original quantization parameter.

In some embodiments of the present application, the second determining portion 20 is further configured to determine a first minimum-rate-distortion cost with a minimum rate-distortion cost from the first best-rate-distortion cost, the second best-rate-distortion cost and the fourth rate-distortion cost; and
if the first minimum-rate-distortion cost is the fourth rate-distortion cost, determine that the frame-level control flag specifies a disabled state;
if the first minimum-rate-distortion cost is the first best-rate-distortion cost, determine that the frame-level control flag specifies an enabled state; or
if the first minimum-rate-distortion cost is the second best-rate-distortion cost, determine that the frame-level control flag specifies a disabled state.

In some embodiments of the present application, the encoder 2 further includes: an encoding portion 22; where
the second determining portion 20 is further configured to: if the first minimum-rate-distortion cost is the second best-rate-distortion cost, determine that the frame-level control flag specifies the disabled state and the frame-level usage flag specifies an enabled state; and
the encoding portion 22 is configured to encode the frame-level usage flag, the frame-level control flag, a block-level quantization parameter offset index and the block-level usage flag into a bitstream.

In some embodiments of the present application, the encoder 2 further includes: an encoding portion 22; where the encoding portion 22 is configured to: after determining that the frame-level control flag specifies the enabled state if the first minimum-rate-distortion cost is the first best-rate-distortion cost, encode the frame-level control flag and a frame-level quantization parameter offset index into a bitstream.

In some embodiments of the present application, the second determining portion 20 is further configured to: after determining the first best-rate-distortion cost based on the at least two first rate-distortion costs, obtain a frame-level quantization parameter offset index corresponding to the first best-rate-distortion cost; where the frame-level quantization parameter offset index is determined based on the at least one frame-level quantization offset parameter and the original quantization parameter.

In some embodiments of the present application, the second filtering portion 21 is further configured to, for the current frame, perform filtering estimation on the current block based on the network filtering model, the reconstructed value of the current block and the original quantization parameter to determine first estimation residual information; determine a first residual scaling factor; scale the first estimated residual value using the first residual scaling factor to obtain first scaled residual information; and determine the first reconstructed value by combining the first scaled residual information with the reconstructed value of the current block.

In some embodiments of the present application, the second determining portion 20 is further configured to: before determining the first residual scaling factor,
for the current frame, obtain the reconstructed value of the current block and at least one of a prediction value of the current block, block partitioning information of the current block or a deblocking filtering boundary strength of the current block; and
the second filtering portion 21 is further configured to perform filtering estimation on the reconstructed value of the current block using the network filtering model and in combination with a frame-level quantization parameter and the at least one of the prediction value of the current block, the block partitioning information of the current block or the deblocking filtering boundary strength of the current block, to obtain first residual information of the current block.

In some embodiments of the present application, the encoder 2 further includes: an encoding portion 22; where the encoding portion 22 is configured to encode the first residual scaling factor into a bitstream.

In some embodiments of the present application, the second filtering portion 21 is further configured to obtain an i-th frame-level quantization offset parameter, and adjust the original quantization parameter based on the i-th frame-level quantization offset parameter to obtain an i-th adjusted frame-level quantization parameter; where i is a positive integer greater than or equal to 1; perform filtering estimation on the current block based on the network filtering model, the reconstructed value of the current block and the i-th adjusted frame-level quantization parameter to obtain an i-th third reconstructed value; and perform rate-distortion cost estimation on the i-th third reconstructed value and the original value of the current block, traverse all blocks of the current frame to obtain an i-th first sub-rate-distortion cost; and continue to perform (i+1)-th filtering estimation based on an (i+1)-th frame-level quantization offset parameter until the filtering estimation is completed at least once to obtain at least one third reconstructed value, so as to determine at least one first sub-rate-distortion cost of the current block.

In some embodiments of the present application, the second filtering portion 21 is further configured to perform the at least once filtering estimation on the current block respectively based on the network filtering model, the reconstructed value of the current block and the i-th adjusted frame-level quantization parameter to obtain an i-th second estimation residual information; determine an i-th second residual scaling factor respectively corresponding to the i-th adjusted frame-level quantization parameter; scale the i-th second estimated residual information using the i-th second residual scaling factor, to obtain i-th second scaled residual information; and determine the i-th third reconstructed value by combining the i-th second scaled residual information with the reconstructed value of the current block correspondingly.

In some embodiments of the present application, the encoder 2 further includes: an encoding portion 22; where the encoding portion 22 is configured to: after determining the frame-level control flag based on the first best-rate-distortion cost and the second best-rate-distortion cost, if a first minimum-rate-distortion cost is the first best-rate-distortion cost, encode a second residual scaling factor corresponding to the first minimum-rate-distortion cost into a bitstream.

In some embodiments of the present application, the second determining portion 20 is further configured to obtain the original value of the current block of the current frame and the reconstructed value of the current block; and obtain the frame-level best quantization parameter of the current frame.

In some embodiments of the present application, the second determining portion 20 is further configured to: if the third sub-rate-distortion cost is less than the second sub-rate-distortion cost, determine that the block-level usage flag specifies an unused state and the second sub-best-rate-distortion cost is the third sub-rate-distortion cost; or if the third sub-rate-distortion cost is greater than or equal to the second sub-rate-distortion cost, determine that the block-level usage flag specifies a used state and the second sub-best-rate-distortion cost is the second sub-rate-distortion cost.

In some embodiments of the present application, the second determining portion 20 is further configured to determine a third minimum-rate-distortion cost from the third rate-distortion cost, the fourth rate-distortion cost and the third best-rate-distortion cost; and
if the third minimum-rate-distortion cost is the fourth rate-distortion cost, determine that the frame-level control flag specifies a disabled state;
if the third minimum-rate-distortion cost is the third rate-distortion cost, determine that the frame-level control flag specifies an enabled state; or
if the third minimum-rate-distortion cost is the third best-rate-distortion cost, determine that the frame-level control flag specifies a disabled state.

In some embodiments of the present application, the encoder 2 further includes: an encoding portion 22; where the second determining portion 20 is further configured to: if the third minimum-rate-distortion cost is the third best-rate-distortion cost, determine that the frame-level control flag specifies the disabled state and the frame-level usage flag specifies a used state; and
the encoding portion 22 is configured to encode the frame-level usage flag, the frame-level control flag, the frame-level best quantization parameter, and a block usage flag into a bitstream.

In some embodiments of the present application, the encoder 2 further includes: an encoding portion 22; where the encoding portion 22 is configured to: after determining that the frame-level control flag specifies the enabled state if the third minimum-rate-distortion cost is the third rate-distortion cost, encode the frame-level control flag and the frame-level best quantization parameter into a bitstream.

In some embodiments of the present application, the second determining portion 20 is further configured to in response to that the sequence-level enabled flag specifies an allowed state, obtain the reconstructed value of the current block, the first quantization parameter and at least one of a prediction value of the current block, block partitioning information of the current block or a deblocking filtering boundary strengt of the current block h;
the second filtering portion 21 is further configured to perform filtering estimation on the current block based on the network filtering model, the reconstructed value of the current block, the first quantization parameter and the at least one of the prediction value of the current block, the block partitioning information of the current block or the deblocking filtering boundary strength of the current block, to determine a fourth reconstructed value;
the second determining portion 20 is further configured to perform rate-distortion cost estimation on the fourth reconstructed value and the original value of the current block to obtain a fourth sub-rate-distortion cost of the current block, and traverse the current frame to determine a fifth rate-distortion cost of the current frame;
the second filtering portion 21 is further configured to perform at least once filtering estimation on the current block based on the network filtering model, at least one frame-level input offset parameter, the reconstructed value of the current block of the current frame, and at least one of the prediction value of the current block, the block partitioning information of the current block or the deblocking filtering boundary strength of the current block, to determine at least one sixth rate-distortion cost of the current frame; and
the second determining portion 20 is further configured to determine the frame-level control flag based on the fifth rate-distortion cost and the at least one sixth rate-distortion cost.

In some embodiments of the present application, the encoder 2 further includes: an encoding portion 22; where the encoding portion 22 is configured to encode the frame-level control flag into a bitstream.

The embodiments of the present application provide the encoder 2, as shown in FIG. 13, the encoder 2 may include:
a second memory 23, configured to store a computer program executable on a second processor 24; and
the second processor 24, configured to perform the method of the encoder when the computer program is executed.

It should be understood that the encoder may determine the quantization parameter inputted to the neural network filtering model based on the adjusted frame-level quantization parameter or the frame-level best quantization parameter, both the frame-level quantization parameter and the frame-level best quantization parameter are adjusted parameters, which are different from the original quantization parameter. In this way, flexible selection and diverse change handing of the frame-level quantization parameter may be achieved without increasing complexity, and the adjustment range of each block may be different, thereby improving encoding efficiency.

The embodiments of the present application provide a computer-readable storage medium, where the computer-readable storage medium stores a computer program, and the computer program, when executed on the first processor, causes the method of the decoder to be implemented, or the computer program, when executed on the second processor, causes the method of the encoder to be implemented.

The various components in the embodiments of the present application may be integrated into a processing unit, or each unit may exist physically separately, or two or more units may be integrated into a unit. The integrated unit may be implemented in a hardware form or may also be implement in form of a software function module.

The integrated unit may be stored in a computer readable storage when it is implemented in the form of a software functional unit and is sold or used as a separate product. Based on such an understanding, the technical solution of the embodiment essentially, or the parts of the technical solutions that contributes to the related art, or all or part of the technical solutions, may be embodied in the form of a software product which is stored in a storage medium and includes instructions for causing a computer device (which may be a personal computer, a server, or a network device and so on) or a processor to perform all or part of the steps described in the various embodiments of the present application. The computer-readable storage medium includes various media that can store program codes, such as a ferromagnetic random access memory (FRAM), a read-only memory (ROM), a programmable read-only memory (PROM), an erasable programmable read-only memory (EPROM), an electrically erasable programmable read-only memory (EEPROM), a flash memory, a magnetic surface storage, an optical disk, or a compact disc read-only memory (CD-ROM), which is not limited in the embodiments of the present disclosure.

The foregoing descriptions are merely specific implementations of the present application, but the protection scope of the present application is not limited thereto. Any person skilled in the art may readily conceive of changes or replacements within the technical scope of the present application, which shall be all included within the protection scope of the present application. Therefore, the protection scope of the present application shall be subject to the protection scope of claims.

### INDUSTRIAL APPLICABILITY

The embodiments of the present application provide a filtering method, an encoder, a decoder, a bitstream and a storage medium. The frame-level usage flag that is based on a neural network filtering model is obtained by parsing the bitstream; in response to that the frame-level usage flag specifies a used state, a frame-level control flag and a frame-level quantization parameter adjustment flag are obtained, wherethe frame-level control flag is used to determine whether filtering is applied to all blocks of the current frame; in response to that the frame-level control flag specifies an enabled state and the frame-level quantization parameter adjustment flag specifies an enabled state, an adjusted frame-level quantization parameter is obtained; a current block of the current frame is filtered based on the adjusted frame-level quantization parameter and the neural network filtering model, to obtain the first residual information of the current block. In this way, the encoder and the decoder may determine a quantization parameter inputted to the neural network filtering model based on the adjusted frame-level quantization parameter or the frame-level best quantization parameter, both the frame-level quantization parameter and the frame-level best quantization parameter are adjusted parameters, which are different from the original quantization parameter. In this way, flexible selection and diverse change handling of the frame-level quantization parameter may be achieved without increasing complexity, and the adjustment range of each block may be different, thereby improving coding efficiency.

## Claims

1. A filtering method, applied to a decoder and comprising:
parsing a bitstream to obtain a frame-level control flag that is based on a network filtering model, wherein the frame-level control flag is used to determine whether filtering is applied to all blocks of a current frame;
in response to that the frame-level control flag specifies a disabled state and an obtained frame-level usage flag specifies that any video component of a current block is enabled, obtaining a block-level usage flag;
in response to that the block-level usage flag specifies that any video component of the current block is used, obtaining a quantization parameter, wherein the quantization parameter comprises: an adjusted block-level quantization parameter or a frame-level best quantization parameter; and
filtering a current block of the current frame based on the quantization parameter and the network filtering model to obtain first residual information of the current block.

2. The method according to claim 1, wherein obtaining the quantization parameter comprises:
obtaining a block-level quantization parameter offset index; and
obtaining the adjusted block-level quantization parameter based on the block-level quantization parameter offset index.

3. The method according to claim 1, wherein obtaining the quantization parameter comprises:
determining a block-level quantization offset parameter based on a block-level quantization parameter offset index obtained from the bitstream; and
determining the adjusted block-level quantization parameter according to an original quantization parameter obtained from the bitstream and the block-level quantization offset parameter.

4. The method according to claim 1, wherein obtaining the quantization parameter comprises:
obtaining the frame-level best quantization parameter by direct parsing from the bitstream.

5. The method according to claim 1, wherein after obtaining the frame-level control flag that is based on the network filtering model, the method further comprises:
in response to that the frame-level control flag specifies an enabled state, obtaining a frame-level quantization parameter, wherein the frame-level quantization parameter comprises: an adjusted frame-level quantization parameter or a frame-level best quantization parameter; and
filtering the current block of the current frame based on the frame-level quantization parameter and the network filtering model to obtain second residual information of the current block.

6. The method according to claim 5, wherein obtaining the frame-level quantization parameter comprises:
determining a frame-level quantization offset parameter based on a frame-level quantization parameter offset index obtained from the bitstream; and
determining the adjusted frame-level quantization parameter according to an obtained original quantization parameter and the frame-level quantization offset parameter.

7. The method according to any one of claims 1 to 6, wherein before filtering the current block of the current frame based on the quantization parameter and the network filtering model to obtain the first residual information of the current block, or before filtering the current block of the current frame based on a frame-level quantization parameter and the network filtering model to obtain second residual information of the current block, the method further comprises:
obtaining a reconstructed value of the current block.

8. The method according to claim 7, wherein filtering the current block of the current frame based on the quantization parameter and the network filtering model to obtain the first residual information of the current block comprises:
filtering the reconstructed value of the current block using the network filtering model and in combination with the quantization parameter to obtain the first residual information of the current block, so as to complete filtering of the current block.

9. The method according to claim 7, wherein filtering the current block of the current frame based on the frame-level quantization parameter and the network filtering model to obtain the second residual information of the current block comprises:
filtering the reconstructed value of the current block using the network filtering model and in combination with an adjusted frame-level quantization parameter to obtain the second residual information of the current block, so as to complete filtering of the current block.

10. The method according to any one of claims 1 to 6, wherein before filtering the current block of the current frame based on the quantization parameter and the network filtering model to obtain the first residual information of the current block, or before filtering the current block of the current frame based on a frame-level quantization parameter and the network filtering model to obtain second residual information of the current block, the method further comprises:
obtaining a reconstructed value of the current block and at least one of a prediction value of the current block, block partitioning information of the current block or a deblocking filtering boundary strength of the current block;
filtering the current block of the current frame based on the quantization parameter and the network filtering model to obtain the first residual information of the current block comprises:
filtering the reconstructed value of the current block using the network filtering model and in combination with the quantization parameter and at least one of the prediction value of the current block, the block partitioning information of the current block or the deblocking filtering boundary strength of the current block, to obtain the first residual information of the current block, so as to complete filtering of the current block; and
filtering the current block of the current frame based on the frame-level quantization parameter and the network filtering model to obtain the second residual information of the current block comprises:
filtering the reconstructed value of the current block using the network filtering model and in combination with the frame-level quantization parameter and at least one of the prediction value of the current block, the block partitioning information of the current block or the deblocking filtering boundary strength of the current block, to obtain the second residual information of the current block, so as to complete filtering of the current block.

11. The method according to any one of claims 7 to 10, wherein after filtering the current block of the current frame based on the quantization parameter and the network filtering model to obtain the first residual information of the current block, or filtering the current block of the current frame based on the frame-level quantization parameter and the network filtering model to obtain the second residual information of the current block, the method further comprises:
obtaining a second residual scaling factor from the bitstream;
scaling the first residual information of the current block or the second residual information of the current block based on the second residual scaling factor to obtain first target residual information or second target residual information;
determining a second target reconstructed value of the current block based on the second target residual information and the reconstructed value of the current block; or
in response to that the block-level usage flag specifies a used state, determining a first target reconstructed value of the current block based on the first target residual information and the reconstructed value of the current block.

12. The method according to claim 11, wherein the method further comprises:
in response to that the block-level usage flag specifies an unused state, determining the reconstructed value of the current block as the first target reconstructed value.

13. The method according to claim 1, wherein after obtaining the frame-level control flag that is based on the network filtering model, the method further comprises:
obtaining a reconstructed value of the current block and at least one of a prediction value of the current block, block partitioning information of the current block or a deblocking filtering boundary strength of the current block;
in response to that the frame-level control flag specifies the disabled state and the obtained frame-level usage flag specifies that any video component of the current block is enabled, obtaining the block-level usage flag;
in response to that the block-level usage flag specifies that any video component of the current block is used, obtaining an adjusted block-level input parameter, wherein the adjusted block-level input parameter comprises: a parameter obtained by adjusting any one of the prediction value, the block partitioning information and the deblocking filtering boundary strength; and
filtering the current block of the current frame based on the adjusted block-level input parameter, an obtained original quantization parameter and the network filtering model, to obtain third residual information of the current block.

14. The method according to claim 1, wherein before obtaining the frame-level control flag that is based on the network filtering model, the method further comprises:
obtaining a sequence-level enabled flag by parsing; and
in response to that the sequence-level enabled flag specifies an allowed state, obtaining the frame-level control flag that is based on the network filtering model by parsing.

15. A filtering method, applied to an encoder and comprising:
in response to that an obtained sequence-level enabled flag specifies an allowed state, obtaining an original value of a current block of a current frame, a reconstructed value of the current block and a first quantization parameter, wherein the first quantization parameter comprises: an original quantization parameter;
performing at least twice filtering estimation on the current block based on a network filtering model, the reconstructed value of the current block, at least one frame-level quantization offset parameter and the original quantization parameter to determine at least two first sub-rate-distortion costs of the current block, and traversing the current frame to determine at least two first rate-distortion costs of the current frame;
determining a first best-rate-distortion cost based on the at least two first rate-distortion costs;
determining a block-level usage flag and a first sub-best-rate-distortion cost of the current block based on the at least two first sub-rate-distortion costs, and traversing the current frame to determine a second best-rate-distortion cost of the current frame; and
determining a frame-level control flag based on the first best-rate-distortion cost and the second best-rate-distortion cost.

16. The method according to claim 15, wherein performing at least two filtering estimation on the current block based on the network filtering model, the reconstructed value of the current block, the at least one frame-level quantization offset parameter and the original quantization parameter to determine the at least two first sub-rate-distortion costs of the current block, and traversing the current frame to determine the at least two first rate-distortion costs of the current frame, comprises:
performing filtering estimation on the current block based on the network filtering model, the reconstructed value of the current block and the original quantization parameter to determine a first reconstructed value;
performing rate-distortion cost estimation on the first reconstructed value and the original value of the current block to obtain a first sub-rate-distortion cost of the current block, and traversing the current frame to determine a first rate-distortion cost of the current frame; and
performing at least once filtering estimation on the current block respectively based on the network filtering model, the at least one frame-level quantization offset parameter, the original quantization parameter and the reconstructed value of the current block in the current frame, to determine at least one first sub-rate-distortion cost of the current block, and traversing the current frame to determine at least one first rate-distortion cost of the current frame.

17. The method according to claim 15, wherein the first quantization parameter comprises: a frame-level best quantization parameter, the frame-level best quantization parameter is a best quantization parameter calculated directly by the encoder;
after obtaining the original value of the current block of the current frame, the reconstructed value of the current block and the first quantization parameter, the method further comprises:
performing filtering estimation on the current block based on the network filtering model, the reconstructed value of the current block and the frame-level best quantization parameter to determine a second reconstructed value;
performing rate-distortion cost estimation on the second reconstructed value and the original value of the current block to obtain a second sub-rate-distortion cost of the current block, and traversing the current frame to determine a third rate-distortion cost of the current frame;
performing rate-distortion cost estimation based on the original value of the current block and the reconstructed value of the current block of the current frame to determine a third sub-rate-distortion cost of the current block, and traversing the current frame to determine a fourth rate-distortion cost;
determining the block-level usage flag and a second sub-best-rate-distortion cost of the current block based on the second sub-rate-distortion cost and the third sub-rate-distortion cost of the current block, and traversing the current frame to determine a third best-rate-distortion cost of the current frame; and
determining the frame-level control flag based on the third rate-distortion cost, the fourth rate-distortion cost and the third best-rate-distortion cost.

18. The method according to claim 15 or 16, wherein before determining the first best-rate-distortion cost based on the at least two first rate-distortion costs, the method further comprises:
performing rate-distortion cost estimation based on the original value of the current block and the reconstructed value of the current block of the current frame to determine a third sub-rate-distortion cost of the current block, and traversing the current frame to obtain a fourth rate-distortion cost.

19. The method according to claim 18, wherein determining the block-level usage flag and the first sub-best-rate-distortion cost of the current block based on the at least two first sub-rate-distortion costs comprises:
determining a first sub-best-rate-distortion cost with a minimum rate-distortion cost from the third sub-rate-distortion cost of the current block and the at least two first sub-rate-distortion costs; and
if the first sub-best-rate-distortion cost is the third sub-rate-distortion cost, determining that the block-level usage flag specifies an unused state; or
if the first sub-best-rate-distortion cost is any one of the at least two first sub-rate-distortion costs, determining that the block-level usage flag specifies a used state.

20. The method according to claim 19, wherein after determining that the block-level usage flag specifies the used state if the first sub-best-rate-distortion cost is any one of the at least two first sub-rate-distortion costs, the method further comprises:
obtaining a block-level quantization parameter offset index corresponding to the first sub-best-rate-distortion cost, wherein the block-level quantization parameter offset index is determined based on the at least one frame-level quantization offset parameter and the original quantization parameter.

21. The method according to any one of claims 18 to 20, wherein determining the frame-level control flag based on the first best-rate-distortion cost and the second best-rate-distortion cost comprises:
determining a first minimum-rate-distortion cost with a minimum rate-distortion cost from the first best-rate-distortion cost, the second best-rate-distortion cost and the fourth rate-distortion cost; and
if the first minimum-rate-distortion cost is the fourth rate-distortion cost, determining that the frame-level control flag specifies a disabled state;
if the first minimum-rate-distortion cost is the first best-rate-distortion cost, determining that the frame-level control flag specifies an enabled state; or
if the first minimum-rate-distortion cost is the second best-rate-distortion cost, determining that the frame-level control flag specifies a disabled state.

22. The method according to claim 21, wherein the method further comprises:
if the first minimum-rate-distortion cost is the second best-rate-distortion cost, determining that the frame-level control flag specifies the disabled state and determining that the frame-level usage flag specifies an enabled state; and
encoding the frame-level usage flag, the frame-level control flag, a block-level quantization parameter offset index and the block-level usage flag into a bitstream.

23. The method according to claim 21, wherein after determining that the frame-level control flag specifies the enabled state if the first minimum-rate-distortion cost is the first best-rate-distortion cost, the method further comprises:
encoding the frame-level control flag and a frame-level quantization parameter offset index into a bitstream.

24. The method according to claim 15, wherein after determining the first best-rate-distortion cost based on the at least two first rate-distortion costs, the method further comprises:
obtaining a frame-level quantization parameter offset index corresponding to the first best-rate-distortion cost, wherein the frame-level quantization parameter offset index is determined based on the at least one frame-level quantization offset parameter and the original quantization parameter.

25. The method according to claim 16, wherein performing filtering estimation on the current block based on the network filtering model, the reconstructed value of the current block and the original quantization parameter to determine the first reconstructed value, comprises:
for the current frame, performing filtering estimation on the current block based on the network filtering model, the reconstructed value of the current block and the original quantization parameter to determine first estimation residual information;
determining a first residual scaling factor;
scaling the first estimated residual value using the first residual scaling factor to obtain first scaled residual information; and
determining the first reconstructed value by combining the first scaled residual information with the reconstructed value of the current block.

26. The method according to claim 25, wherein before determining the first residual scaling factor, the method further comprises:
for the current frame, obtaining the reconstructed value of the current block and at least one of a prediction value of the current block, block partitioning information of the current block or a deblocking filtering boundary strength of the current block; and
performing filtering estimation on the reconstructed value of the current block using the network filtering model and in combination with a frame-level quantization parameter and the at least one of the prediction value of the current block, the block partitioning information of the current block or the deblocking filtering boundary strength of the current block, to obtain first residual information of the current block.

27. The method according to claim 25 or 26, wherein after determining the first residual scaling factor, the method further comprises:
encoding the first residual scaling factor into a bitstream.

28. The method according to claim 16, wherein performing at least once filtering estimation on the current block respectively based on the network filtering model, the at least one frame-level quantization offset parameter, the original quantization parameter and the reconstructed value of the current block of the current frame, to determine the at least one first sub-rate-distortion cost of the current block, comprises:
obtaining an i-th frame-level quantization offset parameter, and adjusting the original quantization parameter based on the i-th frame-level quantization offset parameter to obtain an i-th adjusted frame-level quantization parameter, wherein i is a positive integer greater than or equal to 1;
performing filtering estimation on the current block based on the network filtering model, the reconstructed value of the current block and the i-th adjusted frame-level quantization parameter to obtain an i-th third reconstructed value; and
performing rate-distortion cost estimation on the i-th third reconstructed value and the original value of the current block, traversing all blocks of the current frame to obtain an i-th first sub-rate-distortion cost; and continuing to perform (i+1)-th filtering estimation based on an (i+1)-th frame-level quantization offset parameter until the filtering estimation is completed at least once to obtain at least one third reconstructed value, so as to determine at least one first sub-rate-distortion cost of the current block.

29. The method according to claim 28, wherein performing filtering estimation on the current block based on the network filtering model, the reconstructed value of the current block and the i-th adjusted frame-level quantization parameter to obtain the i-th third reconstructed value, comprises:
performing the at least once filtering estimation on the current block respectively based on the network filtering model, the reconstructed value of the current block and the i-th adjusted frame-level quantization parameter to obtain an i-th second estimation residual information;
determining an i-th second residual scaling factor respectively corresponding to the i-th adjusted frame-level quantization parameter;
scaling the i-th second estimated residual information using the i-th second residual scaling factor, to obtain i-th second scaled residual information; and
determining the i-th third reconstructed value by combining the i-th second scaled residual information with the reconstructed value of the current block correspondingly.

30. The method according to claim 29, wherein after determining the frame-level control flag based on the first best-rate-distortion cost and the second best-rate-distortion cost, the method further comprises:
if a first minimum-rate-distortion cost is the first best-rate-distortion cost, encoding a second residual scaling factor corresponding to the first minimum-rate-distortion cost into a bitstream.

31. The method according to claim 17, wherein obtaining the original value of the current block of the current frame, the reconstructed value of the current block and the first quantization parameter comprises:
obtaining the original value of the current block of the current frame and the reconstructed value of the current block; and
obtaining a frame-level best quantization parameter of the current frame.

32. The method according to claim 17 or 31, wherein determining the block-level usage flag and the second sub-best-rate-distortion cost of the current block based on the second sub-rate-distortion cost and the third sub-rate-distortion cost of the current block comprises:
if the third sub-rate-distortion cost is less than the second sub-rate-distortion cost, determining that the block-level usage flag specifies an unused state and the second sub-best-rate-distortion cost is the third sub-rate-distortion cost; or
if the third sub-rate-distortion cost is greater than or equal to the second sub-rate-distortion cost, determining that the block-level usage flag specifies a used state and the second sub-best-rate-distortion cost is the second sub-rate-distortion cost.

33. The method according to claim 17, 31 or 32, wherein determining the frame-level control flag based on the third rate-distortion cost, the fourth rate-distortion cost and the third best-rate-distortion cost comprises:
determining a third minimum-rate-distortion cost from the third rate-distortion cost, the fourth rate-distortion cost and the third best-rate-distortion cost; and
if the third minimum-rate-distortion cost is the fourth rate-distortion cost, determining that the frame-level control flag specifies a disabled state;
if the third minimum-rate-distortion cost is the third rate-distortion cost, determining that the frame-level control flag specifies an enabled state; or
if the third minimum-rate-distortion cost is the third best-rate-distortion cost, determining that the frame-level control flag specifies a disabled state.

34. The method according to claim 33, wherein the method further comprises:
if the third minimum-rate-distortion cost is the third best-rate-distortion cost, determining that the frame-level control flag specifies the disabled state and the frame-level usage flag specifies a used state; and
encoding the frame-level usage flag, the frame-level control flag, the frame-level best quantization parameter, and a block usage flag into a bitstream.

35. The method according to claim 33, wherein after determining that the frame-level control flag specifies the enabled state if the third minimum-rate-distortion cost is the third rate-distortion cost, the method further comprises:
encoding the frame-level control flag and the frame-level best quantization parameter into a bitstream.

36. The method according to claim 15, wherein the method further comprises:
in response to that the sequence-level enabled flag specifies an allowed state, obtaining the reconstructed value of the current block, the first quantization parameter and at least one of a prediction value of the current block, block partitioning information of the current block or a deblocking filtering boundary strength of the current block;
performing filtering estimation on the current block based on the network filtering model, the reconstructed value of the current block, the first quantization parameter and the at least one of the prediction value of the current block, the block partitioning information of the current block or the deblocking filtering boundary strength of the current block, to determine a fourth reconstructed value;
performing rate-distortion cost estimation on the fourth reconstructed value and the original value of the current block to obtain a fourth sub-rate-distortion cost of the current block, and traversing the current frame to determine a fifth rate-distortion cost of the current frame;
performing at least once filtering estimation on the current block based on the network filtering model, at least one frame-level input offset parameter, the reconstructed value of the current block of the current frame, and at least one of the prediction value of the current block, the block partitioning information of the current block or the deblocking filtering boundary strength of the current block, to determine at least one sixth rate-distortion cost of the current frame; and
determining the frame-level control flag based on the fifth rate-distortion cost and the at least one sixth rate-distortion cost.

37. The method according to claim 15, wherein the method further comprises:
encoding the frame-level control flag into a bitstream.

38. A decoder, comprising:
a parsing portion, configured to parse a bitstream to obtain a frame-level control flag that is based on a network filtering model, wherein the frame-level control flag is used to determine whether filtering is applied to all blocks of a current frame;
a first determining portion, configured to obtain a block-level usage flag in response to that the frame-level control flag specifies a disabled state and an obtained frame-level usage flag specifies that any video component of a current block is enabled; and obtain a quantization parameter in response to that the block-level usage flag specifies that any video component of the current block is used, wherein the quantization parameter comprises: an adjusted block-level quantization parameter or a frame-level best quantization parameter; and
a first filtering portion, configured to filter a current block of the current frame based on the quantization parameter and the network filtering model to obtain first residual information of the current block.

39. An encoder, comprising:
a second determining portion, configured to obtain an original value of a current block of a current frame, a reconstructed value of the current block and a first quantization parameter in response to that an obtained sequence-level enabled flag specifies an allowed state, wherein the first quantization parameter comprises: an original quantization parameter;
a second filtering portion, configured to perform at least twice filtering estimation on the current block based on a network filtering model, the reconstructed value of the current block, at least one frame-level quantization offset parameter and the original quantization parameter to determine at least two first sub-rate-distortion costs of the current block, and traverse the current frame to determine at least two first rate-distortion costs of the current frame; and
the second determining portion, further configured to determine a first best-rate-distortion cost based on the at least two first rate-distortion costs; determine a block-level usage flag and a first sub-best-rate-distortion cost of the current block based on the at least two first sub-rate-distortion costs, and traverse the current frame to determine a second best-rate-distortion cost of the current frame; and determine a frame-level control flag based on the first best-rate-distortion cost and the second best-rate-distortion cost.

40. A decoder, comprising:
a first memory, configured to store a computer program executable on a first processor; and
the first processor, configured to perform the method according to any one of claims 1 to 14 when the computer program is executed.

41. An encoder, comprising:
a second memory, configured to store a computer program executable on a second processor; and
the second processor, configured to perform the method according to any one of claims 15 to 37 when the computer program is executed.

42. A computer-readable storage medium, wherein the computer-readable storage medium stores a computer program, and the computer program, when executed on a first processor, causes the method according to any one of claims 1 to 14 to be implemented, or the computer program, when executed on a second processor, causes the method according to any one of claims 15 to 37 to be implemented.

43. A bitstream, wherein the bitstream is generated by bit encoding based on information to be encoded, wherein the information to be encoded comprises at least one of: first syntax element flag information of a current video sequence, second syntax element flag information of a current frame, third syntax element flag information of the current frame, fourth syntax element flag information of a current block, fifth syntax element flag information of the current block, sixth syntax element flag information of the current frame, a residual scaling factor, and an initial residual value of at least one partition block included in the current frame; wherein the current frame includes the at least one partition block, and the current block is any one of the at least one partition block.
